(19) **Europäisches Patentamt** / **European Patent Office** / **Office européen des brevets**

(11) **EP 4 380 781 B1**

(12) **EUROPEAN PATENT SPECIFICATION**

(45) Date of publication and mention
of the grant of the patent:
**23.07.2025 Bulletin 2025/30**

(21) Application number: **22757595.8**

(22) Date of filing: **01.08.2022**

(51) International Patent Classification (IPC):
**B29C 64/209** (2017.01)   **B29C 64/106** (2017.01)
**B29C 64/118** (2017.01)   **B33Y 30/00** (2015.01)
**B29C 64/295** (2017.01)   **B22F 10/22** (2021.01)

(52) Cooperative Patent Classification (CPC):
(C-Sets available)
**B29C 64/209; B22F 10/20; B22F 12/53;
B29C 64/106; B29C 64/118; B29C 64/295;
B33Y 30/00;** B22F 2999/00            (Cont.)

(86) International application number:
**PCT/EP2022/071509**

(87) International publication number:
**WO 2023/012088 (09.02.2023 Gazette 2023/06)**

(54) **LIQUEFIER ASSEMBLY FOR EXTRUSION-BASED ADDITIVE MANUFACTURING**

VERFLÜSSIGERANORDNUNG FÜR EXTRUSIONSBASIERTE GENERATIVE FERTIGUNG

ENSEMBLE LIQUÉFIEUR POUR FABRICATION ADDITIVE PAR EXTRUSION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **03.08.2021 EP 21189464**

(43) Date of publication of application:
**12.06.2024 Bulletin 2024/24**

(73) Proprietor: **Katholieke Universiteit Leuven
3000 Leuven (BE)**

(72) Inventors:
 • **ZHANG, Jie
  3000 Leuven (BE)**
 • **FERRARIS, Eleonora
  3001 Heverlee (BE)**
 • **MENG, Fankai
  3000 Leuven (BE)**
 • **DE VOGELAER, Loren
  2870 Puurs-Sint-Amands (BE)**
 • **VANIERSCHOT, Maarten
  3001 Heverlee (BE)**

(74) Representative: **Winger
Mouterij 16 bus 101
3190 Boortmeerbeek (BE)**

(56) References cited:
**WO-A1-2017/183992     CN-U- 204 382 663
KR-B1- 102 106 209     KR-B1- 102 262 891
US-A1- 2020 016 823**

(52)  Cooperative Patent Classification (CPC): (Cont.)

C-Sets
B22F 2999/00, B22F 10/20, B22F 2003/208

**Description**

**Field of the invention**

The present invention relates to additive manufacturing systems for printing or otherwise producing three-dimensional (3D) parts and support structures. In particular, the present invention relates to material extrusion-based additive manufacturing for building three-dimensional parts with layer-based, additive manufacturing techniques. More in particular, the present invention relates to a liquefier assembly for use in an extrusion-based additive manufacturing apparatus comprising a heater block assembly, to an apparatus and to methods of use thereof.

**Background of the invention**

Additive manufacturing (AM), also known as three-dimensional (3D) printing, refers to various methods or processes used to manufacture a 3D object or a part of it. AM is a fast evolving technical field because of its advantages of, for example, tool-less paradigm, supreme degree of freedom in design and rapid production.

The AM technology family is very broad and the different processes are named differently depending on the particular consumable material and shaping principles. The present invention is related to the technique of material extrusion, in which the material is selectively dispensed through a nozzle or orifice. One particular example is fused filament fabrication (FFF), which usually refers to the technique of using thermoplastic polymer filament to produce polymeric parts.

FFF is most commonly known under the trademark protected name Fused Deposition Modeling (FDM) which is part of the material-extrusion-based additive manufacturing techniques. These techniques employ an energy source to heat up a consumable material contained in a liquefier tube of a liquefier assembly of an extrusion-based AM apparatus, to a viscoelastic state after which the material is extruded through a hot-end of the liquefier assembly and selectively deposited on a supporting plate or build platform. The hot-end of a liquefier assembly typically comprises a heater block through which the material is processed, and an outlet, e.g. a nozzle assembly, through which the processed material is extruded on the build platform.

The deposition shape is typically controlled by a standard tessellation language file (.stl) containing a digital representation of the desired 3D object, and manufacturing takes place in a layer-wise fashion.

The material may be a polymer filament which may be heated by the heater block to a material-specific working temperature, e.g. typically between 60°C and 800°C. The heated viscous material is then extruded through the nozzle under the pressure exerted by a piston, a rotating screw or the top part of the still solid filament to be received by the liquefier tube forming a strand on a supporting plate, also referred to as base plane or depositing surface.

When the heated consumable material leaves the nozzle assembly of the liquefier assembly, rapid cooling takes place at an instantaneous cooling rate up to a magnitude of minus one thousand degrees Celsius per second (-1000°C/s), i.e. a cooling rate in the range of -1 to -1000°C/s, due to cooling processes such as heat conduction, convection and radiation. The exact cooling rate depends on the AM process parameters, the material properties and the history of the thermal process.

The cooling rate during material-extrusion-based additive manufacturing processes is of utmost importance because the deposited material segment needs to solidify quickly in order to withstand its self-weight and the dragging disturbance by adjacent segments due to the relative movement between the nozzle and printed parts.

On the other hand, the cooling rate may not be too high since bond formation of contiguous segments develops over a process of intimate contact, coalescence and healing including wetting and neck growth, which requires sufficient thermal energy. Therefore, controlling the temperature profile of the deposited segment upon contact may be beneficial to control the degree of wetting and the size of neck growth between adjacent segments, and ultimately to control bond formation, which is essential to improve the quality and integrity of printed parts with respect to geometrical accuracy, surface finishing, mechanical strength, macro-porosity, micro-porosity, etc. by material-extrusion-based additive manufacturing techniques.

Rapid cooling is well-known in material extrusion AM due to the small geometric characteristic lengths, i.e. layer thicknesses typically in the magnitude of one hundred micrometres (100 $\mu$m). Indeed, the smaller the dimensions of the deposited filaments, the faster the heat transfer may occur. Rapid cooling becomes problematic especially when printing large objects, e.g. objects having at least one length exceeding ten centimetres (10 cm), due to the longer time required to deposit a new (hotter) segment contiguous to the previously deposited segment on the same layer (intra-layer time) or the layer below (inter-layer time).

To affect the spatial and temporal temperature distribution in material extrusion AM during printing, hence the build temperature of the deposited material, there are essentially two known techniques, i.e. influencing the build temperature of the whole part (referred to below as the first strategy or technique) or influencing the build temperature in local regions where bond formation takes place (referred to below as the second strategy or technique).

The first strategy resulted in large expensive AM machines comprising a closed housing or chamber in which the parts are manufactured and in which the ambient air temperature is controlled. These air temperature controlled machines reduce the convective heat flux by raising the air temperature of the chamber, hence delaying cooling of the whole part. Disadvantages of such machines are that they are expensive, take up a lot of space and consume a lot of energy.

The second strategy resulted in solutions such as the one disclosed in 'Improved design of fused deposition modeling equipment for 3D printing of high-performance PEEK parts' (Hu et al., Mech. Mater. October 2019, vol. 137, 103139), wherein the nozzle assembly of a liquefier assembly is able to reduce the energy loss due to convection in the local region, hence, to delay cooling of the deposited segment, by obstructing the air circulation around it with a semi-closed element.

Other known solutions of the second strategy are the use of external components for the purpose of local part heating, such as external heat sources like lasers and infrared lamps connected to the heater block assembly, or the use of a large metal block connected to the heater block assembly as described by Ravoori, D. et al. "Nozzle-integrated pre-deposition and post-deposition heating of previously deposited layers in polymer extrusion-based additive manufacturing", Addit. Manuf., August 2019, Vol.28, 719, stating the advantage of the dependence of the radiant heat transfer on the distance and extension of the emitting surface. A disadvantage of this type of known solutions is the increase of mass of the machine controlled parts which leads to more complex and energy demanding systems.

In KR20200010682 an extruder for a 3D-printer is disclosed. The heating block of the device has a hollow part that allows the nozzle assembly to be connected. The hollow part is completely filled as soon as the nozzle assembly is connected. In other words, it then does not have any free surface anymore contacting the air.

In document US2020/016823 A1 a fused filament fabrication (FFF) printer assembly comprising at least one nozzle is used. The chamfer has somewhat curved surfaces. The bottom surface of the chamfer contacts the polymer in printing. The chamfer is at a certain horizontal distance from the nozzle.

Hence, there is a need for a liquefier assembly for use in an extrusion-based additive manufacturing apparatus addressing at least some of the aforementioned drawbacks.

## Summary of the invention

Therefore, the objective of the present invention is to provide a liquefier assembly for use in an extrusion-based additive manufacturing apparatus, and related method which may significantly increase the intensity of radiant heat transfer from the heater block assembly to the deposited material parts, so as to promote pre-heating and post-heating effects on the bond formation.

Furthermore, it is an object of the present invention to provide an energy efficient material-extrusion-based additive manufacturing apparatus and method which eliminates the need for expensive and massive systems, and wherein bond formation across contiguous material segments may be controlled. Hence, to enhance the overall quality and integrity of printed parts.

In accordance with a first aspect of the present invention, there is provided a liquefier assembly for use in an extrusion-based additive manufacturing apparatus, comprising: a liquefier tube extending between an inlet opening and an outlet opening, wherein the inlet opening is configured to receive a consumable material, and wherein the liquefier tube is configured to facilitate the transport of the consumable material through the liquefier assembly between the inlet opening and the outlet opening; a nozzle assembly coupled to the outlet opening of the liquefier tube and configured to extrude the consumable material in a first direction; and a heater block assembly disposed around at least a portion of the liquefier tube and configured to heat the consumable material in the liquefier tube, comprising a first major outer surface facing in the first direction and a first recess in the first major outer surface, wherein the first recess exhibits, in section, at least one boundary edge configured to converge thermal radiation in substantially the first direction or a direction having an angle to the first direction. It is an advantage of the liquefier assembly to provide a heater block assembly being used an additional internal heat source. The thermal radiation converged by the heater block is used to reach local pre-heating and/or post-heating conditions and the first recess may influence the build temperature in the local surface regions where bond formation takes place without any need of an external heat source like, for example without being limited thereto, a laser or infrared lamp. The use of a heater block assembly according to embodiments of the present invention is more energy efficient in promoting bond formation because it affects the local temperature only where and when the bond formation happens.

According to a particular embodiment of the present invention, the nozzle assembly is at least partly disposed in at least a portion of the first recess. It is an advantage of embodiments of the present invention that materials having a high coefficient of thermal expansion or high processing temperature may be used as consumable materials since these materials are usually difficult to be used for AM machines without heated building chamber.

According to embodiments of this invention, the first recess creates a cavity with respect to the nozzle assembly, meaning that the nozzle assembly cannot fill the cavity, it still leaves a space that forms a cavity where radiation can reflect. It is an advantage of the invention that such a cavity is beneficial for causing the thermal radiation to reflect multiple times, thereby amplifying the emitted amount of radiation.

According to a specific embodiment of the present invention, the first recess is a first cylindrical shaped recess extending in a working direction, wherein the working direction corresponds to, when the liquefier assembly is in use, a direction in which it is moveable. It is an advantage of the embodiments of the present invention that thermal radiation is converged on the printed parts resulting in an enhanced pre-heating and post-heating effect.

According to a specific embodiment of the present invention, the major outer surface further comprises a second cylindrical shaped recess extending in the working direction. This second cylindrical shaped recess has the advantage of reheating neighbouring elements of deposited material or strands. The conductive heat transfer will be lower which impacts the overall local cooling rate which will be slower.

According to a particular embodiment, the first and the second cylindrical shaped recess are separated from each other over a core-to-core distance w, wherein w is between zero point eight (0.8) and twenty (20) times the diameter opening of the nozzle $\phi$, in particular one point two (1.2) times $\phi$. This second cylindrical shaped recess has the advantage of reheating neighbouring elements of deposited material or strands. The conductive heat transfer will be lower which impacts the overall local cooling rate which will be slower.

According to a specific embodiment of the present invention, the at least one boundary edge of the recess, in section, defines a circular, elliptical, parabolic, sinusoidal, rectangular, triangular, polygonal, or a smooth or piece-wise smooth shape. This has the advantage that the heater block assembly is used as an additional internal heat source. In particular, the at least one recess influence the build temperature in local surface regions where bond formation takes place without the need of external means (e.g. laser, infrared lamp). In addition, the use of the heater block is more energy efficient in promoting bond formation because it affects the local temperature only where and when the bond formation happens, and the thermal radiation from the heater block. In some embodiments recesses of different shapes can be present in the heater block assembly.

According to advantageous embodiments of the present invention, the at least one boundary edge of the recess is concave.

According to a specific embodiment of the present invention, the major outer surface comprises a plurality of second recesses, wherein each second recess exhibits, in section, at least one boundary edge configured to converge thermal radiation in substantially the first direction. This allows increasing the effect of pre- and post-heating over a larger area of the build platform.

According to a specific embodiment of the present invention, the first recess and the plurality of second recesses are disposed in a one or two-dimensional pattern over at least a portion of the major outer surface. This allows the travelling directions of the nozzle to be more diversified, i.e. not limited to some predetermined working directions. Additionally, embodiments of the present invention allow more choice of the raster angles or in fill angles, by which directions the strands are deposited.

According to a specific embodiment of the present invention, at least the first recess and/or the plurality of second recesses have an emissivity of at least 0.03, preferably at least 0.5, or more preferably at least 0.9, for example by mechanical or chemical surface modifications such as texturing, coating, spraying etc.... The higher the emissivity, the lower the required nozzle temperature and heat energy has to be to reach the same or similar pre- and post-heating effects. Hence, a higher emissivity may lead to a higher saving of energy and/or material since a smaller heat block assembly may be used to reach the same of similar pre- and post-heating effects.

According to a specific embodiment of the present invention, the heater block assembly further comprises at least one cavity adapted to receive at least one means for controlling the heating of the consumable material.

According to a particular embodiment of the present invention, the heater block assembly further comprises at least a first part and a second part, wherein the first part is in direct contact with the nozzle assembly and the second part is removable attachable to the first part.

According to a particular embodiment of the present invention, the first recess is only disposed in the major outer surface of the second part of the previous embodiment.

According to specific embodiments of the present invention, one or more of the first and/or second recesses are multifaceted. In this way emission is promoted by converging the reflection of the thermal radiation and thus has a radiation amplifying effect

According to a further aspect of the invention there is provided a liquefier assembly for use in an extrusion-based additive manufacturing apparatus, comprising a liquefier tube extending between an inlet opening and an outlet opening, wherein the inlet opening is configured to receive a consumable material, and wherein the liquefier tube is configured to facilitate the transport of the consumable material through the liquefier assembly between the inlet opening and the outlet opening; a nozzle assembly coupled to the outlet opening of the liquefier tube and configured to extrude the consumable material in a first direction; and a heater block assembly disposed around at least a portion of the liquefier tube and configured to heat the consumable material in the liquefier tube, comprising a first major outer surface facing the first direction and a first recess in the first major outer surface, wherein the first recess exhibits, in section, a surface modification (such as texturing, coating, spraying, etc...) of at least one boundary edge so that thermal radiation is converged in substantially the first direction or a direction having an angle to the first direction.

According to another aspect of the invention, there is provided a method for printing a three-dimensional part in a layer-by-layer manner with an additive manufacturing system, the method comprising: feeding a consumable material to a liquefier assembly, wherein the liquefier comprising a liquefier tube extending between an inlet opening configured to receive a consumable material and an outlet opening, wherein the liquefier tube is configured to facilitate the transport of the consumable material through the liquefier assembly between the inlet opening and the outlet opening, a nozzle assembly coupled to or integrally formed with the outlet opening of the flow channel and configured to extrude the consumable material in a first direction, and a heater block assembly disposed around at least a portion of the liquefier tube and configured to heat the consumable material in the liquefier tube, comprising a major outer surface facing the first direction and a first recess in the major outer surface, wherein the first recess exhibiting, in section, at least one boundary edge configured to converge thermal radiation in substantially the first direction or a direction having an angle to the first direction; heating the consumable material using the heater block assembly of the liquefier assembly to at least a working temperature of the consumable material; disposing the heater block assembly at a distance between zero point one and eighty millimetres (0.1 - 80 mm) and preferably within one and fifteen millimetres (1-15mm) from a build platform on which a first flow of extruded consumable material will be disposed; and extruding the heated consumable material in the first direction at the first flow rate to produce a first road of the extruded material on the build platform.

According to embodiments of the present invention, the method further comprising a step of moving the liquefier assembly in a working direction with relative working velocity relative to the building platform of at least two millimetres per second, in particular at least ten millimetres per second, or more in particular at least five hundred millimetres per second (500 mm/s).

Particular and preferred aspects of the invention are set out in the accompanying independent and dependent claims. Features from the dependent claims may be combined with features of the independent claims and with features of other dependent claims as appropriate and not merely as explicitly set out in the claims.

Although there has been constant improvement, change and evolution of devices in this field, the present concepts are believed to represent substantial new and novel improvements, including departures from prior practices, resulting in the provision of more efficient, stable and reliable devices of this nature.

The above and other characteristics, features and advantages of the present invention will become apparent from the following detailed description, taken in conjunction with the accompanying drawings, which illustrate, by way of example, the principles of the invention. This description is given for the sake of example only, without limiting the scope of the invention. The reference figures quoted below refer to the attached drawings.

## Brief description of the drawings

Fig.1 illustrates a perspective view of a liquefier assembly for use in an extrusion-based additive manufacturing apparatus according to the present invention.

Fig.2 is a schematic illustration of an extrusion-based additive manufacturing system according to embodiments of the present invention.

Fig.3 depicts a schematic illustration of an extrusion-based additive manufacturing system according to embodiments of the present invention.

Figs.4a, 4b, 4c represent different views of an illustration of a preferred embodiment of a heater block assembly according to embodiments of the present invention.

Figs.5a and 5b show different views of a state-of-the-art heater block assembly.

Figs.6a and 6b show different views of a heater block assembly according to a preferred embodiment of the invention.

Figs.7a and 7b show a schematic perspective view of three different embodiments of a heater block assembly for use in a liquefier assembly according to embodiments of the invention.

Figs.8a, 8b, 8c, 8d and 8e depict different views of a heater block assembly according to a specific embodiment of the invention.

Figs.9a, 9b and 9c illustrate a cross-sectional view of three different preferred embodiments of a heater block assembly according to embodiments of the present invention.

Figs.10a, 10b, 10c and 10d illustrate some alternative shapes of the recess.

Figs.11a, 11b, 11c and 11d illustrate some embodiments where the recess (i.e. a longitudinal axis of the recess) makes an angle $\pi/2 - \Theta$ with the first direction. Fig. 11e illustrates an example of a combination of different recesses making different angles with the first direction.

Figs.12a and 12b depict, respectively, a schematic perspective view and a cross-sectional view of a heater block assembly according to a specific embodiment of the invention.

Figs.13a and 13b depict, respectively, a schematic perspective view and a cross-sectional view of a heater block assembly according to a specific embodiment of the invention.

Figs.14a, 14b, 14c and 14d illustrate, respectively, a bottom view, a cross-sectional view according to the X-Z plane, a cross-sectional view according to the Y-Z plane and a schematic perspective view of a heater block assembly according to embodiments of the present invention.

Figs.15a, 15b, 15c and 15d illustrate, respectively, a bottom view, a cross-sectional view according to the X-Z plane, a cross-sectional view according to the Y-Z plane and a schematic perspective view of a heater block assembly according to embodiments of the present invention.

Figs.16a, 16b, 16c, 16d and 16e depict, respectively, a schematic bottom view, three schematic cross-sectional views and a schematic perspective view of a heater block assembly according to embodiments of the present invention.

Figs.17a, 17b, 17c and 17d depict, respectively, a schematic bottom view, two schematic cross-sectional views and a schematic perspective view of a heater block assembly according to embodiments of the present invention.

Figs.18a, 18b, 18c and 18d depict, respectively, a schematic bottom view, two schematic cross-sectional views and a schematic perspective view of a heater block assembly according to embodiments of the present invention.

Figs.19a and 19b illustrate the set-ups compared in the tests. Fig.19a is an implementation (referred to as G0) based on an existing solution and Fig.19b is an embodiment (referred to as G2) according to the present invention.

Figs.20a to 20d show the simulated radiant heat flux density from G0 and from G2 to the consumable material at various temperatures and emissivities.

Fig.21a and 21b present some monitored temporal and spatial temperature profiles when printing a double-wall of PLA at a travelling speed of 10 mm/s with natural convection.

Fig.22a and 22b present some monitored temporal and spatial temperature profiles when printing a double-wall of PLA at a travelling speed of 5 mm/s with natural convection.

Fig.23a and 23b present some monitored temporal and spatial temperature profiles when printing a double-wall of PLA at a travelling speed of 5 mm/s while a part cooling fan was used.

Fig.24a and 24b show the simulated temporal and spatial temperature profiles in parts printed G2 in the black status at 450°C with natural convection, in contrast to the simulations ignoring the radiant heat transfer between the hot-end and the printed part.

Fig.25a and 25b illustrate the exemplary stress-strain curves of parts printed with G0 in the clean status and G2 in the black status in the tensile property test with a layer thickness in the printing of 100 $\mu$m and 300 $\mu$m, respectively.

In the different figures, the same reference signs refer to the same or analogous elements.

## Detailed description of illustrative embodiments

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not correspond to actual reductions to practice of the invention.

Furthermore, the terms first, second, third and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

Moreover, the terms top, bottom, over, under and the like in the description and the claims are used for descriptive purposes and not necessarily for describing relative positions. It is to be understood that the terms so used are interchangeable with their antonyms under appropriate circumstances and that the embodiments of the invention described herein are capable of operation in other orientations than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. The term "comprising" therefore covers the situation where only the stated features are present and the situation where these features and one or more other features are present. Thus, the scope of the expression "a device comprising means A and B" should not be interpreted as being limited to devices consisting only of components A and B.

When reference is made to "pre-heating" or "post-heating" or a combination of both, reference is made to a method for heating a base material.

When reference is made to "a base material", reference is also made to a deposited consumable material, or a component fabricated by additive manufacturing, and in particular to extrusion-based additive manufacturing. Said base material or deposited component referred herein denotes the formed strand on a supporting plate.

When reference is made to "depositing surface", reference is made to the surface or working area on which material is deposited by an apparatus or system comprising a liquefier assembly according to embodiments of the present invention.

The term "post-heating" as referred herein shall denote a process which is preferably carried out after a solidification of the deposited consumable material has already occurred and a structure for the component is established. Besides the limitation of thermal gradients, post-heating may be very helpful for mitigation or healing defects in the components structure. It is apparent that the post-heating relates to the already solidified structure of the component formed of the consumable material, rather than to the consumable material in the loose or pre-depositing state.

The term "pre-heating" as referred to herein shall mean the heating or thermal preparation of at least a portion of the depositing surface on which consumable material may be extruded or deposited, the heating or thermal preparation of a portion of already deposited material, and/or the heating or thermal preparation of the consumable material for the component for the actual subsequent solidification step, e.g. in order to avoid excessive thermal gradients during the melting/welding process. This may also be expedient for each layer or strand of the component in order to limit thermal gradients in the additive process whose intensity may otherwise easily exceed $10^5$ Kelvin/meter (K/m).

Properties of 3D printed objects may be improved, optimized or calibrated by pre- or post- heating a targeted area of material.

Converging here refers to the ability to increase the intensity of thermal radiation at a focal point or a line of focal points or a surface of focal points. The term "converged thermal radiation" as referred to herein shall mean convergency of thermal radiation that may be sourced from the heater block and/or from the printed part and/or from an external heat source (if such an additional source is present) and/or from an external object via emission, radiation and/or transmission. The converged thermal radiation can be directly targeted to the printed part for the pre-heating and post-heating purposes, or indirectly by reflection and/or by transmission through an additional device (e.g. a mirror and/or a lens).

The following sections will describe apparatuses, systems and methods for improving pre- and post-heating processes for improving interlayer bonding in 3D printing systems. Targeted heat parameters (e.g., direction, aim, intensity, diameter or pattern of pre-heating) may be controlled according to embodiments of the present invention. Interlayer bonding may be calibrated, optimized or improved, for example, by making targeted heating decisions based on one or more heater block assemblies according to embodiments of the present invention. Heating decisions may be static (i.e. fixed) or dynamic (i.e. variable) during 3D printing. Heating decisions may vary based on feedback about one or more parameters, states, or conditions. For example, other parameters influencing the pre- and post-heating may be the distance between the liquefier assembly and the depositing layer or deposited material, the velocity and working direction of the liquefier assembly, the rate of deposition, the environmental temperature, and the bed temperature.

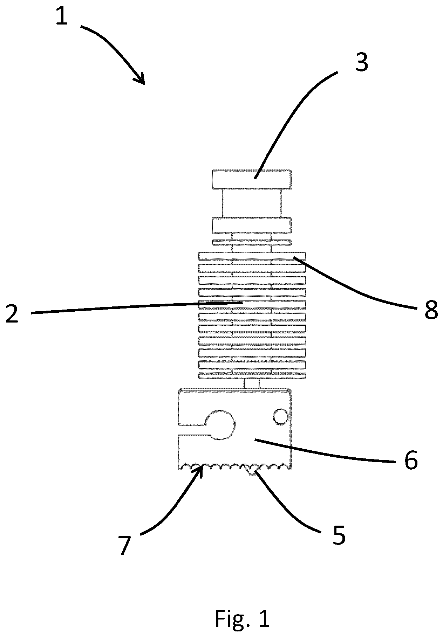

Referring to the drawings of this application, Fig.1 illustrates a perspective view of a liquefier assembly 1 for use in an extrusion-based additive manufacturing apparatus according to the present invention. Embodiments of the present invention may also be used in apparatus for continuous fibre reinforced printing/additive manufacturing, metal or glass extrusion based additive manufacturing.

The liquefier assembly 1 in Fig.1 comprises a liquefier tube 2 extending between an inlet opening 3 configured to receive a consumable material and an outlet opening (not visible in Fig.1), wherein the liquefier tube 2 is configured to facilitate the transport of a consumable material through the liquefier assembly 1 between the inlet opening 3 and the outlet opening. The liquefier assembly 1 further comprises a nozzle assembly 5, herein also referred to as a nozzle head or nozzle, coupled to or integrally formed with the outlet opening of the liquefier tube 2 and configured to extrude the consumable material in a first direction.

The liquefier assembly 1 further comprises a heater block assembly 6 disposed around at least a portion of the liquefier tube 2 and configured to heat the consumable material from the liquefier tube 2, comprising a first major outer surface 7 facing in the first direction and a first recess in the first major outer surface, wherein the first recess exhibiting, in section, at least one boundary edge configured to converge thermal radiation in substantially the first direction or in an angle to the first direction, said angle typically being between 0 and $\pi/2$. In some embodiments the at least one boundary edge is configured to converge thermal radiation in substantially the first direction or in an angle to the first direction, said angle typically being between 0 and $\pi/2$. The heater block assembly 6 comprises a guiding channel to receive at least a part of the liquefier tube 2 such that the heater block assembly 6 may be disposed around at least a portion of the liquefier tube 2. The heater block assembly 6 is configured to heat at least a portion of the consumable material embedded within the portion of the liquefier tube 2 disposed in the guiding channel of the heater block assembly 6.

The liquefier assembly 1 as depicted in Fig.1 may also comprise cooling means 8 disposed around a portion of the liquefier tube 2 to cool the liquefier tube 2 to allow smooth consumable material feed. The cooling means 8 may be a cooling fin designed to ensure that the liquefier tube 2 is sufficiently cooled, so that the filament material can be properly fed into the heater block assembly 6.

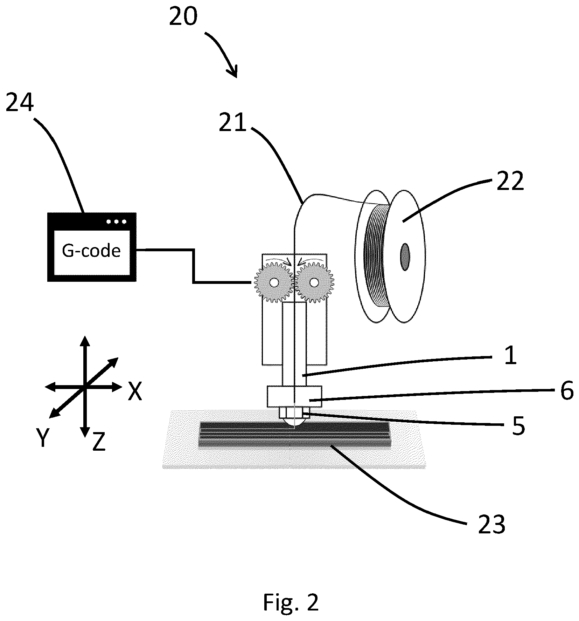

Fig.2 is a schematic illustration of an extrusion-based additive manufacturing system 20 comprising a combination of a liquefier assembly 1, as described in relation to Fig.1, a filament 21 coiled in a spool 22, a base plane 23 and a processing means 24.

The filament 21, also referred to as consumable material, may be made of material such as polymer, in particular thermoplastic polymer, or a metal, or glass, which is delivered to the liquefier tube of the liquefier assembly 1 as a filament 21 coiled in a spool 22, and which is melted in the hot-end before being extruded. That is, the polymer material or metal wire is fed by an extruder into the hot-end where it is heated and melted, by receiving heat, for example by conduction with heat sources embedded in the heater block assembly 6 before being deposited on a base plane 23. The features of a method according to embodiments of the present invention as described above and in the following may be implemented in a print control system 24, i.e. in software and carried out on a data processing system or other processing means 24 caused by the execution of computer-executable instructions. The instructions may be program code means, like G-code, loaded in a memory, such as a RAM, from a storage medium or from another computer via a computer network. Alternatively, the described features may be implemented by hardwired circuitry instead of software or in combination with software. The processing means 24 may be connected to the liquefier assembly 1 for operation purposes.

Other components of a system 20 such as actuators, mounts, sensors, heaters and electronics, used to operate the liquefier assembly 1 are omitted from Fig.2 for ease of illustration.

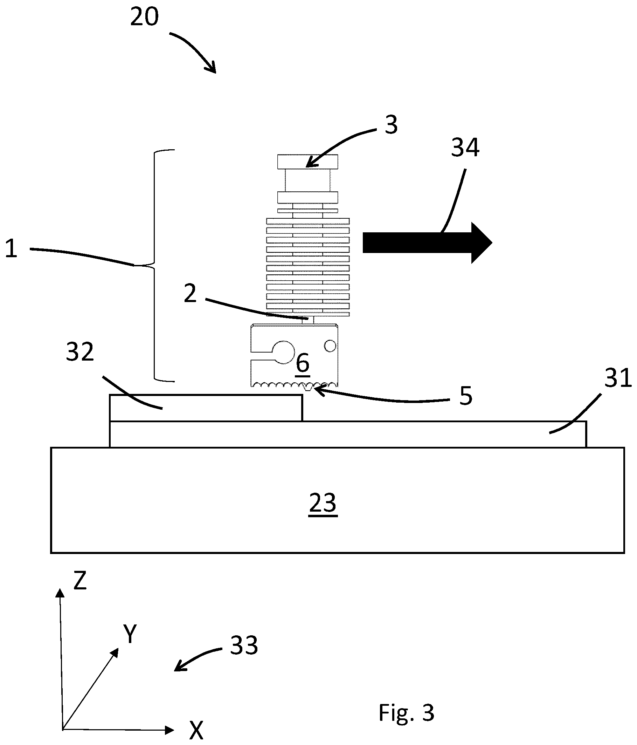

Referring to Fig.3, there is depicted a schematic illustration of an extrusion-based additive manufacturing system 20 as depicted in Fig.2. For clarity purposes, some of the features as described in relation with Fig.2 have not been shown. Fig.3 depicts a system 20 comprising a liquefier assembly 1 according to embodiments of the present invention.

The system 20 comprises a base plane 23, also referred to herein as a depositing surface, supporting plate, heat plate, or target bed, to support the extruded consumable material which form strands 31, 32 on the base plane 23 when embodiments of the invention are in use. This base plane 23 can be a curved plane or a flat plane. A combination of the strands 31, 32 defines an object being printed. The base plane 23 may be fixed or mobile in one or more axes in a translational or rotational manner.

A Cartesian coordinate system or dimensional key 33 is shown in Fig.2 to illustrate three dimensions or axes X, Y and Z. Other coordinate systems may also be used in controlling the printing. In various implementations of embodiments of the present invention, the base plane 23, the nozzle assembly 5 and heater block assembly 6 of the liquefier assembly 1 may variously be fixed or move in one or more of these axes and/or may rotate to implement multi-dimensional printing.

The liquefier assembly 1 may be configured or controlled to move and deposit consumable material in the working direction 34, for example the X-direction in Fig.3, as also indicated by the arrow 34. The liquefier assembly 1 may be configured to extrude or print a consumable material through the nozzle assembly 5. A moveable supporting means or other conveyance technique may be used to move the liquefier assembly 1 in one or more directions. For example, the liquefier assembly 1 may be attached to an X-axis slide. A gear or belt may move the liquefier assembly 1 along linear slides, positioning it in that axis. As another example, the liquefier assembly 1 could also mounted on a multi-axis robot arm and controlled for linear and rotational movement in multiple directions. The base plane 23 may move up and down in the Z-direction, allowing consumable material, processed through the liquefier tube 2 and extruded through the nozzle assembly 5, to be deposited in layers or strands 31, 32 on it. Another set of slides, motors and belts or gears may move the X axis assembly in the Y direction or along other axes, such as rotational axes.

The nozzle assembly 5 of the liquefier assembly 1, herein also referred to as print nozzle or print nozzle assembly, may be coupled to or integrally formed with an outlet opening of the liquefier tube 2. According to embodiments of the present invention, a liquefier assembly 1 may have multiple print nozzles. A nozzle assembly 5 emits or deposits material fed through a liquefier tube 2. A nozzle assembly may be made of any suitable material, e.g., metal, ceramic, glass or thermoplastic or thermoset polymers based materials, and may have one or more orifices (not shown in Fig.3) to emit consumable material. Orifice size and/or shape may be fixed or variable to deposit consumable material with fixed or variable material thicknesses, patterns, etc.

According to embodiments of the invention, the extrusion-based additive manufacturing system 20 may comprise at least one targetable thermal heat source such as a fine stream of hot air, a heated tip of a filament, an electron beam, a laser and a fibre coupled laser diode. The type of targetable thermal heat source may depend on the underlying print technology and material. The targetable thermal heat source may be targetable or may need to incorporate guides or other elements to accurately target them. In an example, a heated metal filament may retain its directional heat properties without other supporting material. In another example, a fibre optic cable may need a structural support or guide to be accurately targeted. The targetable thermal heat source may be mounted to the liquefier assembly 1 or to any other component of the system 20.

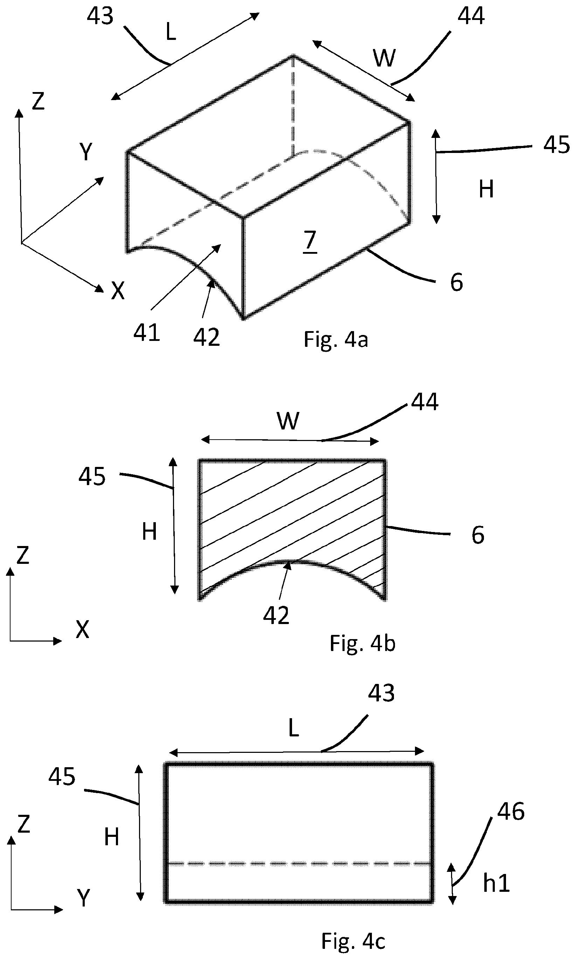

Referring to Fig.4a - 4c, there is illustrated a preferred embodiment of a heater block assembly 6 according to embodiments of the present invention. The other components of the liquefier assembly, like the liquefier tube and nozzle assembly, are not shown for clarity purposes. However, the skilled person will appreciate that such omitted features, and other features, could be used with these descried embodiments also.

Fig.4a is a schematic perspective view for illustrating a preferred example of a heater block assembly 6 for use in a liquefier assembly according to embodiments of the present invention. The heater block assembly 6 may be approximately cuboid-shaped (but is not limited to such a shape in the actual application) comprising a first major outer surface 7, facing a first direction corresponding with the negative Z-direction in Fig.4a - 4c, having at least a portion defining a recess structure 41. The first direction is to be understood as the direction tilted, e.g. normal, to the base plane (not shown) or the direction of the gravity when the liquefier assembly 1 remain upright or the direction in parallel to the liquefier tube 2 and points toward the material flow direction.

In this embodiment the first recess 41 exhibits, in section, at least one concave or inwardly curved boundary edge 42, configured to converge thermal radiation in substantially a first direction or in an angle to the first direction, in other words, converging thermal radiation in the direction of the base plane.

The heater block 6 in Fig.4a - 4c has a length L 43 measured according to the Y-direction, a width W 44 measured according to the X-direction, and a height H 45 measured according to the Z-direction, and the first recess extends over the entire length L 43 and width W 44 of the heater block assembly 6. The first recess 41 in Fig.4a - 4c is substantially cylindrical shaped and is inwardly curved to a height h1 46, measured along the Z-direction. However, as described hereinafter, embodiments of the invention may define a heater block assembly 6 having a first recess 41 in a first major outer surface 7 which is different in shape, dimension and position as the one illustrated in Fig.4a - 4c.

Fig.4b illustrates a cross-sectional view of the heater block assembly 6 taken along the X-Z plane. The first recess defines a first recess boundary edge 42 exhibiting in section a concave or inwardly, i.e. opposed to the first direction or according to the positive Z-direction, curved boundary edge configured to converge thermal radiation in substantially the first direction, i.e. negative Z-direction.

Fig.4c illustrates a cross-sectional view of the heater block assembly 6 along the Y-Z plane. The height h1 46 to which the first recess is inwardly curved is indicated with a dashed line.

The advantage of using a heater block assembly 6 having a first recess structure 41 in a liquefier assembly of an extrusion-based additive manufacturing system according to embodiments of the invention, is that heater block assembly 6 may be used as an additional (internal) heat source for pre-heating and post-heating. The at least one first recess has at least one boundary edge configured or adapted to converge thermal radiation and, hence, influences the build temperature in local surface regions where bond formation takes place without the need of external means (e.g. laser, infrared lamp). Moreover, the use of the heater block is more energy efficient in promoting bond formation because it affects the local temperature only where and when the bond formation happens. Moreover, the thermal radiation from the heater block, which is otherwise wasted, is used to reach local pre-heating and post-heating conditions. This will be further illustrated hereinafter.

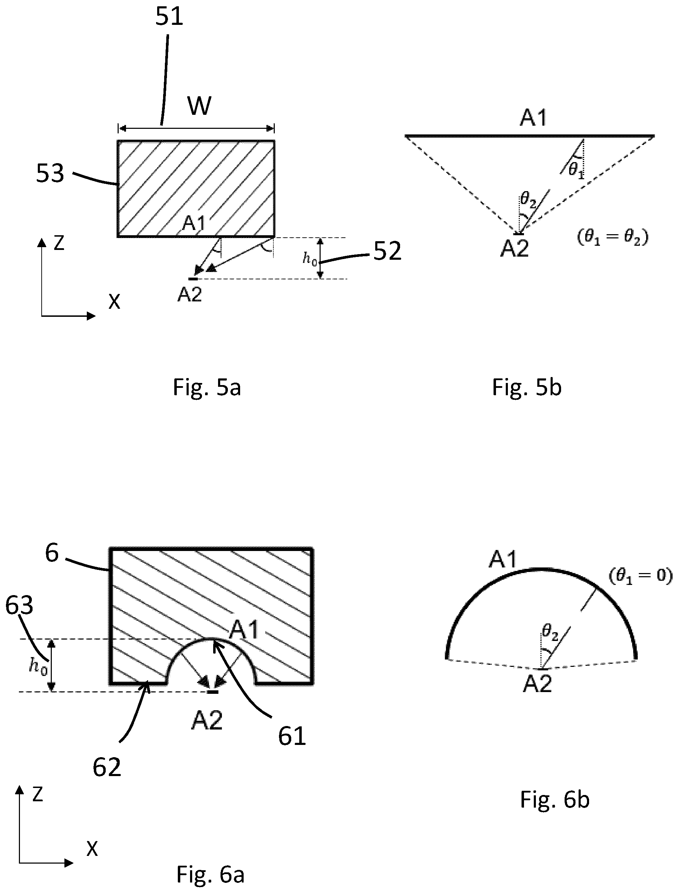

At least one of the advantageous aspects of embodiments of the present invention may be illustrated by referring to Fig.5a and 5b, i.e. a prior art heater block assembly 53 without a first recess in a first major outer surface, and to Fig.6a and 6b, i.e. a heater block assembly 6 of a liquefier assembly according to embodiments of the present invention. The other components of the liquefier assembly, like the liquefier tube and nozzle assembly, are not shown in Figs.5a, 5b, 6a and 6b for clarity purposes. However, the skilled person will appreciate that such omitted features, and other features, could be used with these described embodiments also.

Fig.5a is a cross-sectional view of a heater block assembly 53 not having a recess, i.e. having a substantially flat first outer surface. The heater block has a width W 51 and, when in use, the distance between the nozzle tip (A2) and the hot-end bottom plane (A1) measured along the Z-axis, is denoted as $h_0$ 52. In this exemplary embodiment, the width 51 of the heater block 53 equals sixteen millimetres (16 mm), and the distance $h_0$ 52 equals eight millimetres (8 mm). Moreover, it is assumed that the heater block assembly 53 is not moving with respect to the base plane, i.e. a static case assumption. Under the static case assumption and ignoring the presence of a recess in the first major outer surface of the block 53, the pre-heating and/or post-heating on a particular unit surface area $A_2$ of the base plane or deposited material by a hot surface area $A_1$ may be quantified by a product $K_{\text{no recess}}$ between the view factor $F_{A1 \to A2}$ and the hot surface area $A_1$ as described in Equation 1. For a unit surface area element $A_2$ and a unit length (along the direction into the paper), $K_{\text{no recess}}$ can be expressed as

$$K_{\text{no recess}} = F_{A1 \to A2} A_1 = \int_{A_1} \frac{\cos\theta_1 \cos\theta_2}{\pi s^2} \, dA_1 = 2 \int_0^{\frac{\pi}{4}} \frac{(\cos\theta_2)^2}{\pi\left(\frac{h_0}{\cos\theta_2}\right)^2} h_0 \frac{1}{(\cos\theta_2)^2} \, d\theta_2$$

$$= \frac{2}{\pi h_0} \int_0^{\pi/4} (\cos\theta_2)^2 \, d\theta_2 = \frac{1}{\pi h_0}\left(\frac{\pi}{4} + \frac{1}{2}\right) \qquad (1)$$

wherein s is the vector between a point in surface $A_1$ and $A_2$, having a magnitude equal to s. As demonstrated in Fig.5b, $\theta_1$ is the acute angle between vector s and local surface normal on surface $A_1$. $\theta_2$ is the acute angle between vector s and the surface normal of surface $A_2$. Hence, for the heater block assembly 53 depicted in Fig.5a and 5b, $\theta_1$ equals $\theta_2$.

Referring to Fig.6a and 6b, there is illustrated a heater block assembly 6 of a liquefier assembly (without showing the other components of the liquefier assembly for clarity reasons) according to embodiments of the present invention. The heater block assembly 6 comprises a first recess structure 61 in a first major outer surface 62. The first recess structure 61 is substantially cylindrical shaped, defining a substantially half circular shaped inwardly curved boundary edge in a cross-section according to the X-Z plane. The distance between the nozzle tip (A2) and the hot-end bottom plane (A1) measured along the Z-axis, is denoted as $h_0$ 63. In contrast to the embodiment of the heater block depicted in Fig.5a, $\theta_1$, i.e. the acute angle between vector s and local surface normal on surface $A_1$, equals zero for cylindrical shaped recesses. Hence, a product $K_{recess}$ between the view factor $F_{A1 \to A2}$ and the hot surface area $A_1$ may be expressed as

$$K_{\mathbf{recess}} = F_{A1 \to A2} A_1 = \int_{A_1} \frac{\cos \theta_2 \cdot 1}{\pi s^2} \, \mathrm{d}A_1 \approx 2 \int_0^{\pi/2} \frac{\cos \theta_2}{\pi h_0^2} h_0 \, \mathrm{d}\theta_2 = \frac{2}{\pi h_0} \qquad (2)$$

Hence, $\frac{K_{\text{recess}}}{K_{\text{no recess}}} = 1.56$ which means the recess in the first major outer surface 52 of the heater block assembly 6 can, in a sense, improve the radiant heat transfer by 56%. This is the fundamental rationale of the effect of converged thermal radiation by the recessed surfaces on the bottom side of the hot-end.

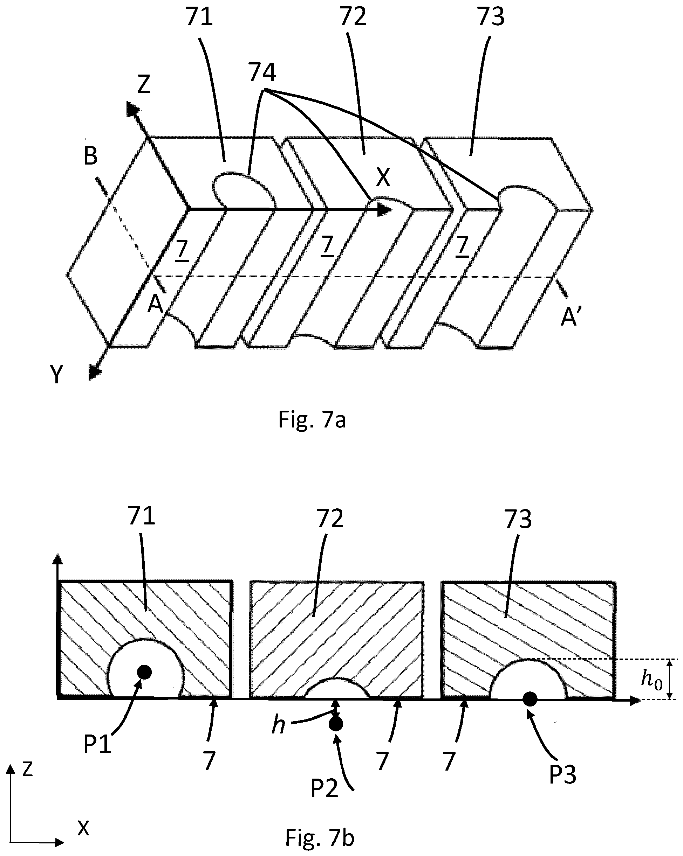

Fig.7a shows a schematic perspective view of three different embodiments 71, 72, 73 of a heater block assembly for use in a liquefier assembly according to embodiments of the invention. For clarity purposes, other components of the liquefier assembly like, for example, the nozzle assembly and liquefier tube, are omitted in Fig.7a. Each of the embodiments 71, 72, 73 in Fig. 7a comprising a heater block assembly having a first major outer surface 7 wherein a first recess is exhibiting, in section, at least one boundary edge 74 (which in these embodiments is concave shaped) configured to converge thermal radiation in substantially the first direction, wherein the first direction is in the negative Z-direction in Fig.7a. Hence, the concave boundary edge is curved inwardly, i.e. towards a second major outer surface of the heater block (not visible in Fig.7a) wherein the second major outer surface is disposed opposite to the first major outer surface.

Referring to Fig.7b, a schematic cross-sectional view according to a plane parallel to the X-Z plane of each of the embodiments 71, 72, 73 illustrated in Fig.7a is shown. The cross-section is based on a cutting-plane according to a plane defined by the points A, A' and B. As described before, the first major outer surface 7 of a heater block assembly 71, 72, 73 may also be referred to, when in use, as the bottom side of the liquefier assembly.

When in use, the Z-axis as indicated in Fig.7b, may substantially be oriented in a direction away from a depositing surface (not shown) or against the gravity direction. The first recess or plurality of recesses in the first major outer surface 7 are configured such that a line of the respective focal points (P1, P2, P3), wherein the position of a focus point depends on the shape and location of the first recess or recesses, may be located within the volume defined by the first recess, in the plane defined by the major outer surface 7 or the base plane, or below this plane or surface. Each of these cylindrically shaped recesses having a substantially uniform diameter along a longitudinal axis of the recess resulting in a line of focal points corresponding substantially with or parallel to the longitudinal Y-axis.

According to a first preferred embodiment 71 of a heater block assembly illustrated in Fig.7a and 7b, the line of focal points P1 is located or disposed within the (cylindrical shaped) volume defined by the first recess. Hence, P1 is located upward (in the positive Z-direction) or above the major outer surface.

According to a second preferred embodiment 72 of a heater block assembly according to the present invention, the line of focal points P2 is located below the first major outer surface 7 of the heater block assembly.

According to a third preferred embodiment 73 of a heater block assembly according to the present invention, the line of focal points P3 defined by the recess in the first major outer surface 7, is located in the plane defining at least a portion of the first major outer surface 7.

The distance between the line of focal points and the major outer surface 7 measured according to the negative Z-direction may be denoted by height h in Fig.7b. This height h is only indicated in relation to heater block assembly 72, but may as well be defined for the each other heater block assembly of a liquefier assembly according to embodiments of the present invention. Depending on the shape, position and size of the first recess, the height $h$ may be positive, zero or negative, or vary along the recess.

Hence, according to embodiments wherein $h \geq 0$, for example for heater block assemblies 72 and 73 in Fig.7b, the line of focal points of the first recess is located on (for embodiment 73) or below (for embodiment 72) a plane in which the first major outer surface 7 is located when viewed according to the (positive) Z-direction. A heater block assembly for use in liquefier assembly according to embodiments of the invention in which the height h is larger than or equal to zero (0), i.e. $h \geq 0$, a more efficient pre-heating and/or post-heating process may occur compared to heater block assemblies for which the height h is negative.

The height h may be infinite for a heater block assembly having a substantially flat first major outer surface 7, resulting in less controllable and less optimal pre-heating and post-heating process in comparison with a heater block assembly according to embodiments of the present invention, i.e. having a first recess in its first outer major surface exhibiting, in section, at least one boundary edge configured to converge thermal radiation in substantially the first direction or in an angle to the first direction.

Nevertheless, the inventors of the present invention disclosed herein surprisingly found that the presence of a first recess structure in the first major outer surface of the heater block assembly of a liquefier assembly according to embodiments of the present invention will significantly enhance these pre-heating and/or post-heating effects, and reduce the temperature gradient in the printed part. The part cooling was significantly delayed, resulting in better bond quality. The inventors also surprisingly found that the embodiments presented in this invention can greatly reduce the printing defects of warpage, layer delamination, stringing, etc. They also allow the printing of certain materials to be performed in an unheated or uncontrolled build chamber. Such printing can be challenging or impossible with a conventional heat block without the recess for pre-heating or post-heating.

Another relevant dimension in embodiments of the present invention is the distance between the nozzle tip of a nozzle assembly and the plane defining the first major outer surface of a heater block assembly, as indicated in relation to embodiment 73 in Fig.7b, and denoted by $h_0$. According to embodiments of the present invention, $h_0$ may vary between zero point one and eighty millimetres (0.1 - 80 mm) and preferably within 1 and fifteen millimetres (1-15mm), depending on how the nozzle assembly is connected to the outlet opening of the liquefier tube. Embodiments having a smaller $h_0$ may be more beneficial since a smaller lower $h_0$ may result in a larger view angle which is beneficial for the radiant heat transfer when the invention is in use.

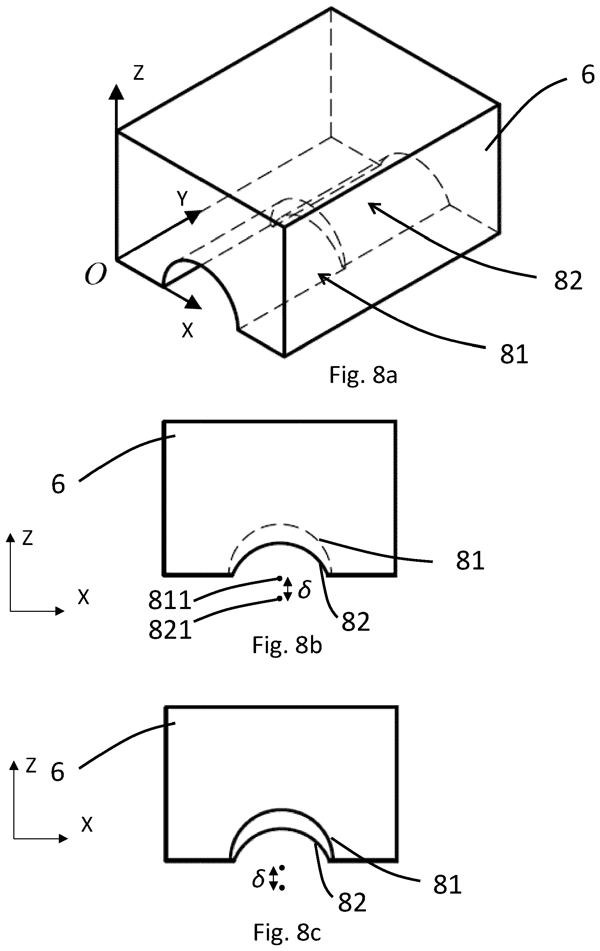

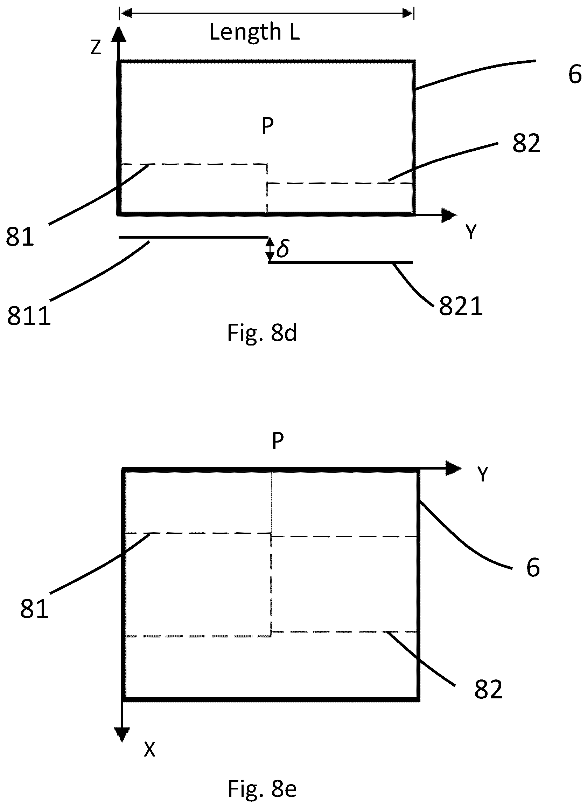

Referring to Fig.8a, there is depicted a schematic perspective view of a heater block assembly 6 according to a specific embodiment of the invention (not showing the presence of a liquefier tube and nozzle assembly for clarity purposes), wherein the liquefier assembly comprises a heater block assembly 6 substantially comprising two cylindrical shaped recess structures 81, 82 having two different lines of focal points (811 and 821 in Figs. 8b and 8d). The transition place between the two halves (i.e. point P in Figs. 8d and 8e) approximately indicates the position of a nozzle assembly (the nozzle is not drawn) according to embodiments of the present invention. Considering the nozzle (or nozzle assembly) travelling first in the positive Y-direction (i.e. + Y) and then in the negative Y-direction (i.e. - Y) about the same total distance, having an embodiment when the nozzle located at the middle location, i.e. P=L/2, ensures a balanced pre-heating and post-heating function. The line of focal points of the second recess 82 and the first recess 81 has a vertical (i.e. according to the Z-direction) difference of $\delta$ (e.g. Figs.8b, 8d), i.e. the layer thickness or height. This parameter may be subject to variations. The inventors surprisingly found that the second recess 82 is more suitable for pre-heating, whereas the first recess 81 is more suited for post-heating. A preferred nozzle travelling direction may be the positive Y-direction in Fig.8a.

The layer height $\delta$ can vary from process to process. Indeed, when in use, the liquefier assembly according to embodiments of the present invention may dispose consumable material in a layer-by-layer fashion, wherein each layer comprises strands. Any given layer may be of a uniform or non-uniform nature. Likewise, a solid dosage form may itself be of a uniform or non-uniform nature, be it on an intra-layer or inter-layer basis or both (i.e. different layers may have a different nature). Uniformity of any given layer (or layer-to-layer) suitably relates to one or more of the layer(s)' composition (e.g. distribution of ingredient(s) throughout the layer - a core-shell solid dosage form may inevitably lead to some natures comprising zone(s) of core material and zone(s) of shell material), density (e.g. the % infill), porosity (the distribution of pores throughout the layer), patterning (e.g. where multiple filaments may give rise to particular patterns). Suitably filament(s) are printed/extruded onto the build platform (or onto a partially formed solid dosage form thereon) at a pre-defined "layer height" (i.e. the distance in the "Z" direction between the top and bottom of a given layer, as opposed to the width or length of the layer in the X or Y direction). The layer height may be determined/controlled, for instance, by the size/diameter of the output opening of the corresponding nozzle (which in some embodiments may be variable, though it is suitably a fixed size), the nozzle extrusion speed (i.e. the slower the nozzle travels during extrusions, the more filament is deposited in a given place for a given filament feed rate), the filament feed rate.

Referring back to Fig.8b, there is demonstrated a schematic cross-sectional view, according to the X-Z plane, in the negative Y-direction of the heater block assembly 6 as shown in Fig.8a and described before. The second recess 82 in the major outer surface of the heater block assembly 6 is indicated by the inwardly curved, rather concave without being limited thereto, boundary edge. When viewing the heater block assembly 6 in the negative Y-direction, the inwardly curved boundary edge of the first recess 81 is hidden and may be not entirely visible from that viewing angle, and is therefore indicated with a dashed line in Fig.8b.

Referring to Fig.8c, there is demonstrated a schematic cross-sectional view, according to the X-Z plane, in the positive Y-direction of the heater block assembly 6 as shown in Fig.8a and described before. The second recess 82 in the first major outer surface of the heater block assembly 6 is indicated by the inwardly curved, rather concave without being limited thereto, boundary edge. When viewing the heater block assembly 6 in the positive Y-direction, the inwardly curved boundary edge of the first recess 81 is visible and from that viewing angle, and is therefore indicated with a full line in Fig.8c.

Referring to Fig.8d, there is demonstrated a schematic cross-sectional side view according to the Y-Z plane of the heater block as illustrated in Fig.8a. If the transition place between the two recess structures, indicated with P in Fig.8d and 8e, is larger than the half of the total length of the specific embodiment, i.e. P>L/2, this specific embodiment is more suitable for post-heating purposes when the liquefier assembly travels in the positive Y-direction. On the other hand, if the transition place between the two recess structures, indicated with P in Figs.8d and 8e, is smaller than the half of the total length of the specific embodiment, i.e. P<L/2, this specific embodiment is more suitable for pre-heating purposes when the liquefier assembly travels in the positive Y-direction.

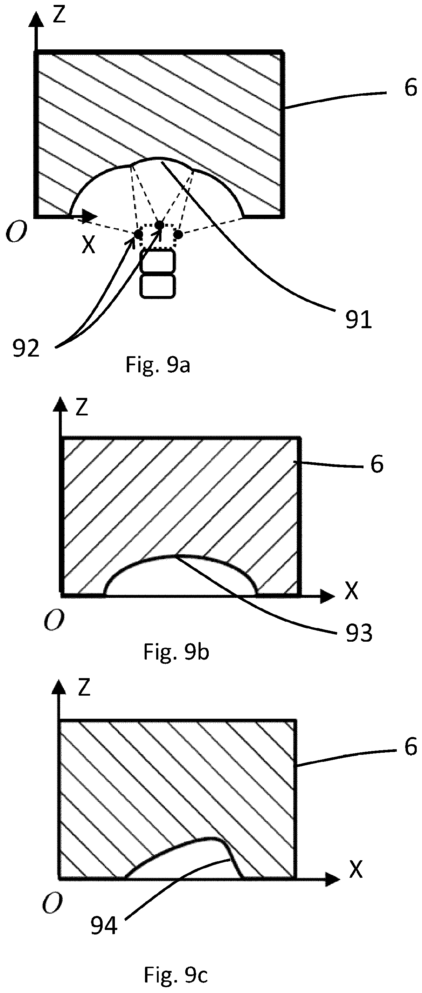

Although previous exemplary embodiments of the invention demonstrated a liquefier assembly comprising a heater block assembly having a first substantially symmetrical recess, it should be noted that embodiments of the current invention are not limited to these (combinations of) symmetrical recesses. Referring to Fig.9a, 9b and 9c, there are demonstrated schematic cross-sectional views of heater block assemblies having a piece-wise cylindrical surface 91 (Fig.9a), an elliptical surface 93 (Fig.9b), and a parabolic irregular surface 94 (Fig.9c), without being limited hereto. The surface has to be inwardly curved surface since it has to be adapted to converge thermal radiation in the first direction, i.e. when in use, the direction of the base plane of a system on which consumable material can be printed or disposed, or in an angle to said first direction.

Referring to Fig.9a there is depicted a cross-section in the X-Z plane of a specific embodiment of the heater block assembly 6 having a piece-wise cylindrical surface 91. Hence, this specific embodiment has three lines of focal points 92 located on the three sides of the topmost strands, i.e. the strand just being deposited, or the strand that will be covered by the new strand soon. This specific embodiment has the advantage that it promotes the radiant heat transfer for post- and pre-heating.

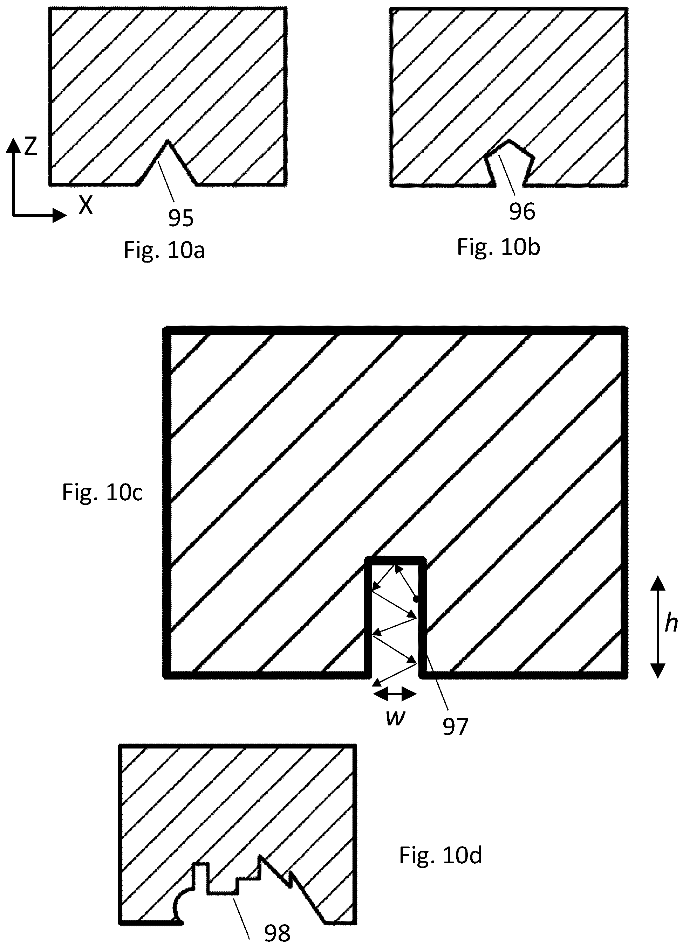

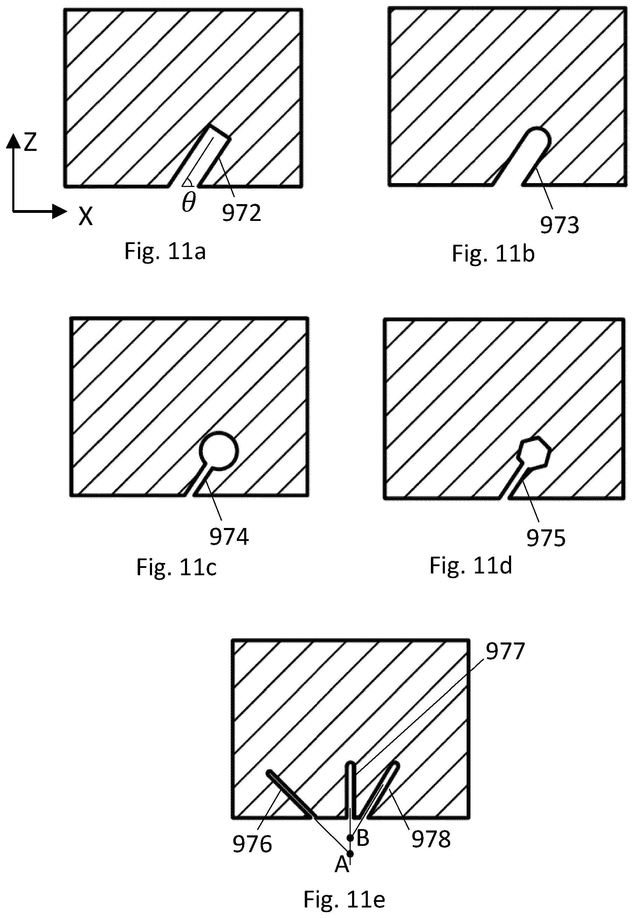

The skilled person will readily recognize that in embodiments of the present invention the shape of the recess is not limited to the one shown in preceding figures. Some alternatives are illustrated in Figs.10 and 11.

In Figs.10a/b/c/d the recess has a triangular (95), pentagonal (96), rectangular (97) and piecewise smooth (98) shape, respectively. In the rectangular recess (97) in Fig.10c the width w and the depth $h$ can be varying. The width w may be in the range of 0.5 to 10 times the diameter opening of the nozzle. It is preferable to have the ratio of $h/w$ higher than five (5), or, more ideally, higher than ten (10). When the recess emits thermal radiation, it will reflect multiple times before leaving the recess opening to converge in a focal point/line of focal points/surface of focal points. This makes the reflected or emitted radiation appear as being black (i.e. with an emissivity $\varepsilon$ close to 1, in any case higher than 0.8) even if the recess surface itself has a low emissivity. A multifaceted recess as for example in Fig.10b may be advantageous in that it promotes emission by converging the reflection of the thermal radiation and thus has a radiation amplifying effect. In Fig.10d various types of recess are combined.

In Fig.11a to 11e some possible variations of the recess of Fig.10c are shown. The longer side of the rectangular recess forms an angle $\theta$ with the +X direction, as shown in recess 972 in Fig.11a. The angle with the first direction then corresponds to $\pi/2 - \theta$. Also here multiple reflections of thermal radiation may occur before converging. The extremity of the recess is not limited to a flat shape as in Fig.10c or Fig.11a. In Fig.11b the recess 973 has a cylindrical end. Further variations are illustrated in Figs.11c and 11d, where the recess forms a cavity attached to the end of the recess and connected to the first major outer surface via a narrow tubular shaped channel. Providing such a cavity may be advantageous for amplifying the thermal radiation, as it allows for multiple reflections. In Fig.11c the cavity of the recess 974 has a circular shape, whereas the recess 975 in Fig.11d comprises a cavity with a hexagonal shape. In other embodiments multiple recesses may be present to be combined in order to deliver converged radiation. Fig.11e illustrates an embodiment with three recesses (976, 977 and 978). The radiation emitted by recesses 976 and 977 converges at point A and the radiation from recesses 977 and 978 converges at point B. Points A and B may coincide to achieve enhanced radiation at a single location. Points A and B may be different to achieve reheating on different material segments.

According to embodiments of the present invention, the first major outer surface may comprise a second recess, hence defining a heater block assembly having multiple recesses or recess structures. One illustration was already provided in Fig.11e.

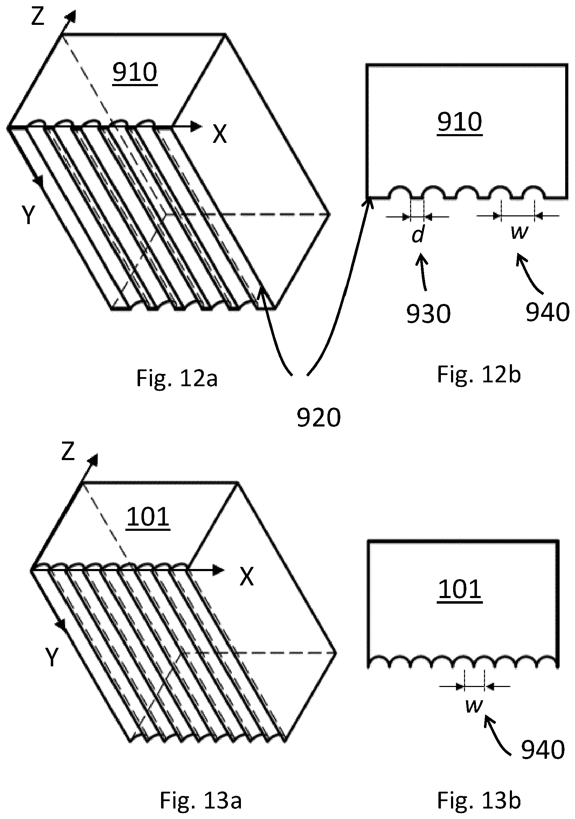

Referring to Fig.12a and 12b, there is shown a schematic perspective view (cf. Fig.12a) and a cross-sectional view (cf. Fig.12b) of a heater block assembly 910 according to a specific embodiment of the invention, and a corresponding cross-sectional view according to the X-Z plane. Other components of a liquefier assembly according to embodiments of the present invention are omitted for clarity purposes. The heater block assembly 910 comprises a plurality of cylindrical shaped recesses in a first major outer surface 920. The recesses are extending in the working direction (i.e. the Y-direction). Each recess of the plurality of recesses is separated from an adjacent recess by separating adjacent surface portions of the first outer surface having a width $d$ 930 measured in a second direction perpendicular to the working direction or Y-direction. The core-to-core distance of adjacent recess is expressed as a distance w 940.

Referring to Fig.13a and 13b, there is, similar to Fig.12a and 12b, also shown a schematic perspective view of a heater block assembly 101 having multiple recesses or recess structures. The width d (930) of the adjacent surfaces, as defined in relation to the heater block in Fig. 12a and 12b, is almost zero. The width d can also be negative. In that case adjacent recesses intersect above the first major outer surface 920.

The distance w between two adjacent recesses has an advantage if the lines of focal points (if they are well defined) locate on the top surface of two adjacent strands, meaning the distance between their lines of focal points is equal to the strand width. The strand width is a free variable in FFF, usually it can be expressed as a proportion of the nozzle diameter $\phi$. Thus it is essential to use a specific embodiment as in Figs.12 or 13 with a specific nozzle. w in the range of 0.8 times $\phi$ and 20 times $\phi$ can be selected based on the nozzle diameter $\phi$ (but more fundamentally, based on the intended strand width). An optimized match may be obtained when w equals 1.2 times $\phi$.

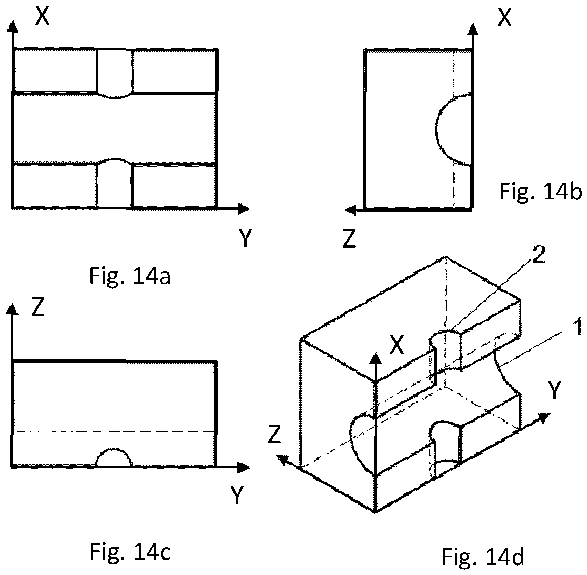

According to specific embodiments of the present invention, the heater block assembly may comprise a multiple of recesses arranged in different directions. Fig.14a - 14d illustrate recesses or recess structures which may be of a particular form as described before, or a combination of different forms of those embodiments. In the embodiment as shown in Fig.14a - 14d, a first portion of the recess may extend in the working direction or Y-direction, and a second portion of the recess may cross the first portion and substantially extend in a direction perpendicular to the working or Y-direction and parallel to the X-Y plane, hence in the X-direction.

The skilled person may appreciate that different combinations of recess structures in a first major outer surface of the heater block assembly may be possible, on condition that the resulting recess or recess structure converge thermal radiation in substantially the first direction or in an angle to the first direction, as defined before.

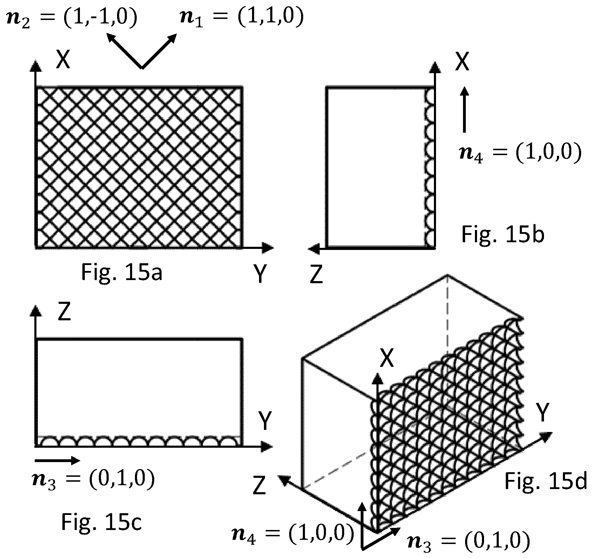

Referring to Fig.15a - 15d, different schematic views of a heater block assembly are illustrated, wherein the heater block assembly comprises the recesses arrays arranged in the X and Y direction, defining a raster-like shape. The recess arrays can be arranged in any other direction combinations as well, such as the along two directions defined by the two vectors $n_1=(1,1,0)$ and $n_2=(1,-1,0)$. The recess arrays can be arranged in more than two directions. For example, four recess arrays along four directions defined by the vectors $n_1=(1,1,0)$, $n_2=(1,-1,0)$, $n_3=(0,1,0)$ and $n_4=(1,0,0)$.

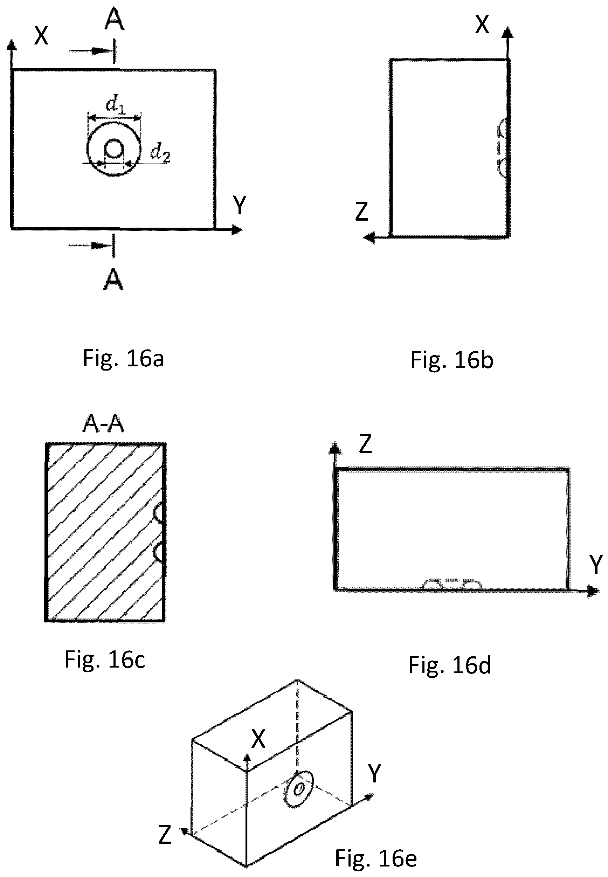

Referring to Fig.16a - 16e, different views of a preferred embodiment of a heater block assembly according to the current invention have been illustrated. This heater block assembly comprises recesses of different shapes in the first major outer surface, i.e. on the bottom side of the heater block assembly, wherein the recesses may be arranged in an annular way. A nozzle tip may be located at the centre of the ring. The diameter of the ring ($\frac{1}{2}(d_1 + d_2)$), and the width $\frac{1}{2}(d_1 - d_2)$ of the recess are subjected to variations. The bottom side can have multiple annular recesses placed concentrically. These annular recesses may be separated by a flat concentric ring.

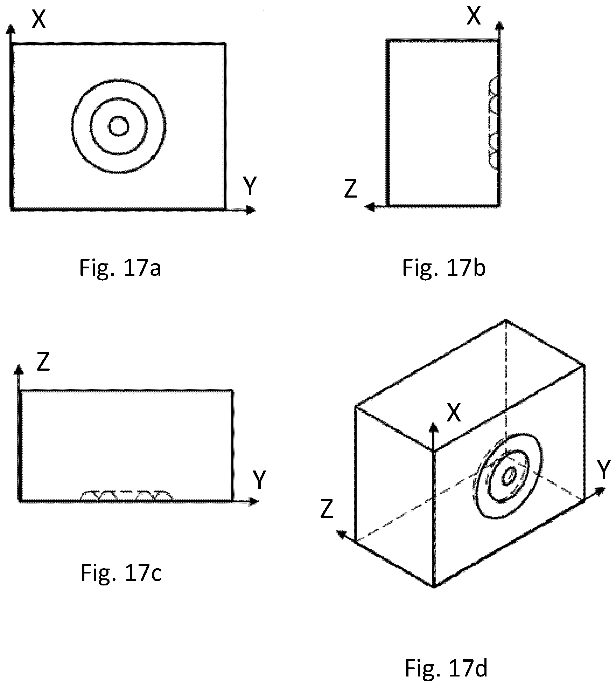

Different views of a heater block assembly according to an exemplary embodiment of the current invention, have been illustrated in Fig.17a - 17d. This heater block assembly comprises two adjacent annular recesses as shown in Fig.17d.

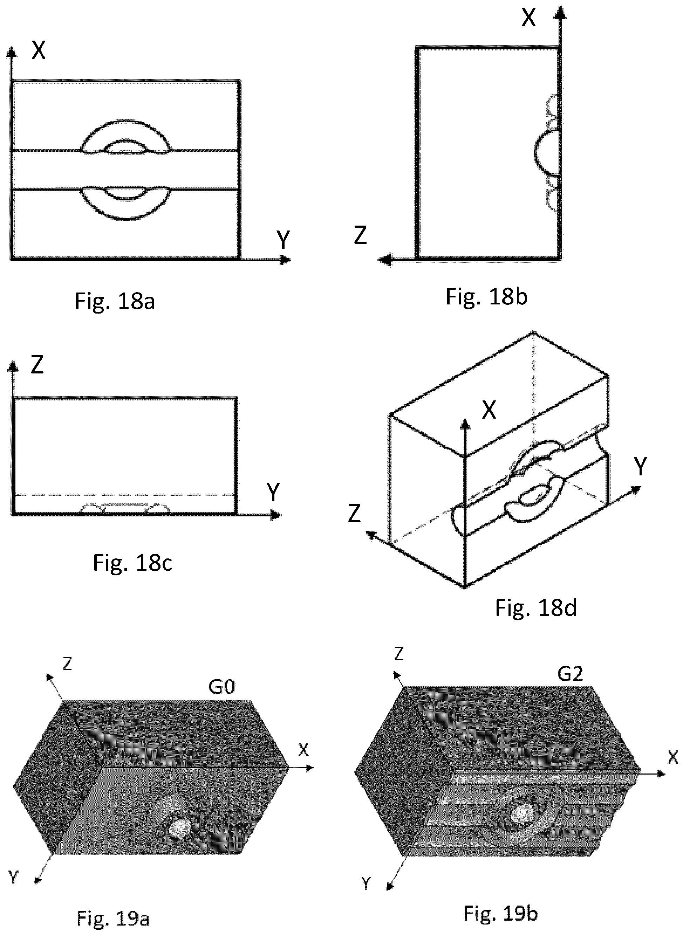

Different views of a heater block assembly according to an exemplary embodiment of the current invention, have been illustrated in Fig.18a - 18d. This heater block assembly comprises an annular recess in combination with a cylindrical shaped recess.

The heat flux emitted by the hot-end bottom surface is described by Stefan-Boltzmann's law of thermal radiation $q = \varepsilon\sigma(T^4 - T_\infty^4)$. The flux is in a direct proportion to the material emissivity $\varepsilon$. For most commercial liquefier hot-ends, they are made of aluminium, its emissivity is extremely low $\varepsilon = 0.03$. Thus, raising can effectively raising the radiant heat flux intensity. The recess in the above embodiments should have an emissivity of at least 0.03, preferably at least 0.5, or more preferably at least 0.9.

Surface modification, material selection, coatings, spray, micro-structures, etc., are all possible way to achieve such a goal.

Some test results are now presented. In the tests results are compared obtained with either a setup G0 derived from a prior art solution without recess structure or with a setup G2 according to the invention. Both implementations are made of aluminium, and equipment with E3D v6 nozzles of diameter 0.4 mm. G0 is derived from a commercially available hot-end, wherein its length (in the X-direction in Fig.19a) is enlarged from 20 mm to 30 mm so that the nozzle is located in the middle of the length direction, so as to achieve a balanced pre-heating and post-heating effect. The width (Y-direction in Fig.19a) of G0 is 16 mm. The height (Z-direction in Fig.19a) of G0 is 12.5 mm. The embodiment G2 is obtained by specifying in Fig.6a $h_0=4$ mm and in Fig.12b a heater block assembly 910 with dimensions $w=4$ mm and d=-2 mm. The length (X-direction in Fig.19b) of G2 is 30 mm. The width (Y-direction in Fig.19b) of G2 is 16 mm. The overall height (Z-direction in Fig.19b) of G2 is 15.5 mm.

For each hot-end embodiment, three statuses can be differentiated, referred to as *"clean", "dirty"* and *"black"*. The *clean* status means the bottom surfaces of the hot-end remain the same as when they were purchased or manufactured. They exhibit the emissivity of the metal block, typically being rather low. The label "G0C" refers to the embodiment of G0 being in the clean status. The *dirty* status means the bottom surfaces of the hot-end can be partially or fully contaminated with the consumable material, thus exhibiting an emissivity in between that of the metal block and the consumable material. The *black* status means the bottom surfaces of the hot-end exhibit an emissivity value rather close to 1 (e.g. >0.8) in pertinent infra-red wavelength ranges. The label "G2B" refers to the embodiment of G2 being in the black status. One exemplary way to achieve the black status in this work was to use the spray of LabIR® Paint IRHERP-HT-MWIR-BK-11.

The results discussed below validate that embodiments of this invention, like e.g. G2, are able to slow down the part cooling, to reduce temperature gradient and to promote bond quality and ultimate mechanical properties. Discussed below are the three parts of the tests:

- simulations of radiant flux from the hot-end to printed parts
- temperature simulation and monitoring in printed parts

- tensile mechanical properties of printed parts

**Radiant flux from the hot-end to the printed part**

To simulate the net incident radiation from the hot-end to the consumable material, computational fluid dynamics simulations were performed. The energy equation was solved using the finite volume method where the convective heat transfer on each wall was not considered. The solver used was Ansys Fluent 2022R1. The boundaries of the computational domain were taken at 5 centimetres from each side wall of the hot-end and each boundary was treated as a black body with a radiation temperature of 20°C. The radiation used the surface-to-surface (S2S) model, where the view factors for each element between two surfaces were calculated. The radiation of both the hot-end and consumable material was assumed to be diffusive. A grid convergence study showed that a mesh of 1343976 cells gave a maximum discretisation error of less than 0.5%.

For each setup GOC (G0 in the clean status, Fig.19a), G2C and G2B (G2 in the clean and black status, Fig.19b), the radiant heat flux density from the hot-end to the material plane at the nozzle tip was obtained for various temperatures of the hot-end and consumable material. The hot-end/nozzle temperature was set at exemplary values of 200°C for printing poly(lactic acid) (PLA) and 450°C for printing poly(ether-ether-ketone) (PEEK). The consumable temperature took 10 or 11 steps between the room temperature (20°C) and the hot-end temperature.

The hot-end emissivity of the bottom side of various embodiments was set at 0.03 for the clean status, 0.8 for the dirty status, and 0.95 for the black status. The hot-end emissivity of the lateral sides of various embodiments was set at 0.03, assuming they always remain clean and thus would not significantly compromise the energy efficiency of the hot-end. The consumable emissivity was set at 0.8.

Given the setups of G0 and G2, the radiant flux density $q_{he-m}$ has planes of symmetry at X=0 and Y=0. Thus, only results of $q_{he-m}$ for $X \geq 0$, $Y \geq 0$ at characteristic consumable temperatures are presented hereafter.

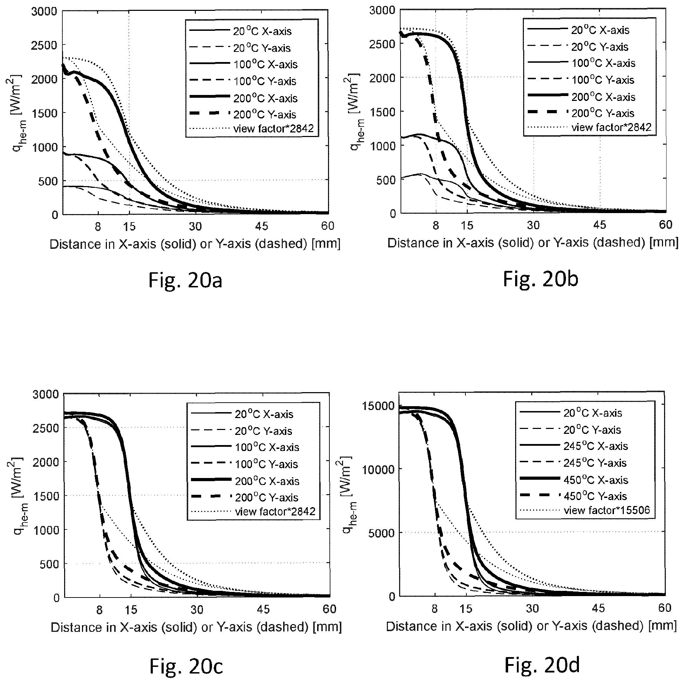

Fig.20a presents the radiant heat flux density from the hot-end implementation GOC (G0 in the clean status) to the X-axis and Y-axis in the material plane at an exemplary hot-end temperature of 200°C and material temperatures of 20, 100 and 200°C. The coordinate origin was set at the nozzle tip. It can be seen that with a clean hot-end GOC (emissivity 0.03, reflectivity 0.97), it behaves like a mirror. The resultant radiant heat flux density on the material location depends mostly on the temperature of the consumable material itself. The higher the temperature is, the higher the flux density. When the consumable material was at the highest temperature (200°C), the flux density reached around 2100 W/m$^2$ for locations close to the origin. For all material temperatures, the radiant flux density rapidly decreases towards 0 when the location exceeds half of the length (30 mm) or width (16 mm). The flux decay could be well-described by the view factor decay as indicated by the dotted lines. The view factor was calculated based on analytical results of the radiation between a finite area and an infinitesimal place element, ignoring the presence of the nozzle and the cavity for installation. The multiplication factor 2842 W/m$^2$ is the emissive flux density of a black body at 200°C.

Fig.20b presents the radiant heat flux density $q_{he-m}$ from the hot-end embodiment G2C (i.e. G2 in the clean status) to the X-axis and Y-axis in the material plane at exemplary hot-end temperatures of 200°C and material temperatures of 20, 100 and 200°C. The coordinate origin was set at the nozzle tip. When the hot-end remains clean, it maintains the mirror-like behaviour due to its high reflectivity (0.97). Hence, the resultant flux depends mainly on the temperature of the consumable material itself. The decays behaviour shares the characteristic as the case of G0C, i.e. the radiant flux density rapidly decreases towards 0 when the location exceeds half of the length (30 mm) or width (16 mm), and the decay can be well-described by the view factor decay as indicated by the dotted lines. However, due to the cylindrical recess, the radiation converging effects show up. For example, at the consumable temperature of 200°C, the flux density reached around 2600 W/m$^2$ for locations close to the origin. This marks an increase of 24% compared with the case of G0C.

Fig.20c presents the radiant heat flux density $q_{he-m}$ from the hot-end embodiment G2B (G2 in the Black status) to the X-axis and Y-axis in the material plane at an exemplary hot-end temperature of 200°C and material temperatures of 20, 100 and 200°C. The coordinate origin was set at the nozzle tip. When the hot-end was sprayed black (estimated emissivity 0.95), the mirror-like behaviour disappeared. The flux density shows only a weak dependence on the temperature of the consumable material. Most of the flux was from the emission of the hot-end surface itself. The decays of the flux can still be well-described by the view factor decay indicated by the dotted lines. During the printing of PLA, the temperature of printed parts typically remains at a relatively low level, such as 40 - 70°C, as a result of the rapid cooling nature of FFF. Thus the embodiment of G2 in the black status can achieve a much stronger pre-heating and post-heating effect compared with G0 or G2 in the clean status. The flux density with G2B can maintain 2700 W/m$^2$ for location around the nozzle tip, regardless of the consumable material. This marks an increase in the flux density by 210% (based on the consumable material temperature at 100°C), or more realistically, 340% (based on the consumable material temperature at 60°C) compared with G0C.

Fig.20d presents the radiant heat flux density $q_{he-m}$ from the hot-end embodiment G2B (G2 in the Black status) to the X-axis and Y-axis in the material plane at an exemplary hot-end temperature of 450°C and material temperatures of 20, 245 and 450°C. The origin was set at the nozzle tip. As the radiant heat transfer has a strong dependence on the temperature, the radiant heat flux significantly increases when the hot-end was set at higher temperatures. When the embodiment G2 is in the black status, the resultant flux density shows only a weak dependence on the temperature of the consumable material. Most of the flux was from the emission of the hot-end surface itself. The decays of the flux can still be well-described by the view factor decay indicated by the dotted lines. The multiplication factor 15506 $W/m^2$ is the emissive flux density of a black body at 450°C. Regardless of the temperature of consumable material, the flux density reached 1.4 - 1.5 $kW/m^2$ for locations close to the origin, and the pre-heating and post-heating effects will be strong and significant.

**Temperature in the printed part**

The temperature in the printed part was monitored and simulated on a double-wall of dimensions 18x0.8x12 [mm], printed at a strand width of 0.4 mm and layer thickness of 0.3 mm. In total, 40 layers were printed. The following two hot-end embodiments were used for the printing on two Prusa MK3 FFF machines : GOC (G0 in the clean status) and G2B (G2 in the black status).

The nozzle/hot-end temperature was set at 200 °C to print the consumable material of PLA (Prusa PLA Transparent). The build plate temperature was set at 60°C. A nozzle travelling speed of either 10 mm/s or 5 mm/s was used. An external fan was also used to simulate the case of forced convection. For each hot-end implementation, three testing conditions were used, namely speed 10 mm/s with natural and no convection, 5 mm/s with natural and no convection and 5 mm/s with forced convection.

The temperature monitoring was performed with an infra-red (IR) camera (Optris PI640) working in the wavelength range of 7.5-13 $\mu$m and spatial resolution of 31.25 $\mu$m/pixel. The sampling frequency was 32 Hz. For local temporal temperature, an arithmetic average of temperature of 6 by 3 pixels was taken. The material emissivity in the IR camera took the default value of 1 for data analysis. More details of the monitoring setup could be found in the paper *"Thermography based in-process monitoring of Fused Filament Fabrication of polymeric parts"* (E. Ferraris et al., CIRP Ann. 68 (2019) 213-216. doi:10.1016/j.cirp.2019.04.123*)*.

The temperature simulation was performed with the T4F3 model (see the paper *"T4F3: Temperature for Fused Filament Fabrication"*, J. Zhang, et al., Prog. Addit. Manuf. (2022). doi:10.1007/s40964-022-00271-0.), considering thermal conduction within the printed part, thermal convection with the near environment, thermal radiation between the printed part and the far environment for all free surfaces, and thermal radiation between the hot-end and up-ward facing free surface, subjected to the initial condition of the consumable material leaving the nozzle having the nominal nozzle/hot-end temperature and the Dirichlet boundary condition of the bottom side of the part contacting the build plate. The net radiant heat flux from the hot-end to the up-ward facing free surface in the printed part takes the interpolation and extrapolation results from $q_{he-m}$ in the flux simulation. The radiant heat flux from the printed part to the far environment was corrected by the factor of (1 - *respective local view factor)* whenever appropriate. The thermal and physical properties (density, heat capacity and thermal conductive) took the values from the paper *"Improved design of fused deposition modeling equipment for 3D printing of high-performance PEEK parts"* (B. Hu, et al., Mech. Mater. 137 (2019) 103139. doi:10.1016/j.mechmat.2019.103139). The emissivity of the consumable material was set at 0.8.

For all temperature results, the label "Exp." was added to indicate results from experimental monitoring; the label "Sim." was added to indicate results from simulations.

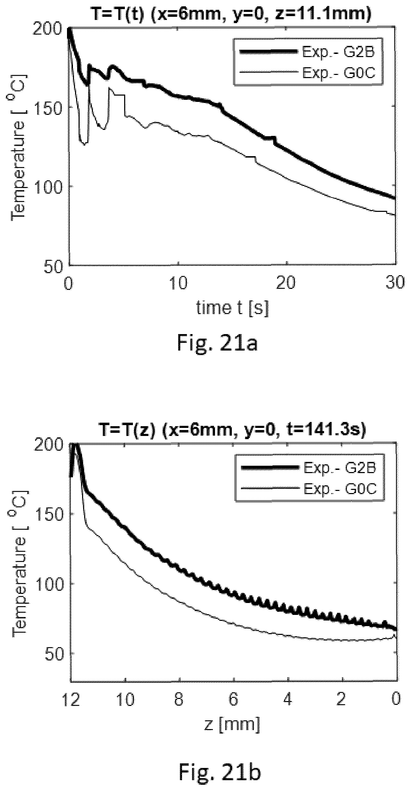

Fig.21 presents the monitored temperature profiles in printing a double-wall of PLA at a nozzle travelling speed of 10 mm/s with natural convection. Fig.21a presents the local temporal temperature profiles T=T(t) at the location (6,0,11.1) mm with the hot-ends GOC and G2B. Due to the stronger pre-heating and post-heating effects of converged thermal radiation from G2B, the part cooled down much more slowly than in the case of printing with hot-end G0C, and the temperature upon reheating was 38°C higher. The maximum cooling rate ($|\partial T/\partial t|$) was decreased from 146 to 45°C/s. Fig.21b presents the spatial temperature profiles T=T(z) at x=6 mm, y=0 mm, and t=141.3 s with hot-ends GOC and G2B. It can be seen the part printed with G2B has a higher temperature everywhere than the counterpart printed with G0C, and the temperature gradient component ($|\partial T/\partial z|$) is smaller in printing with hot-end G2B.

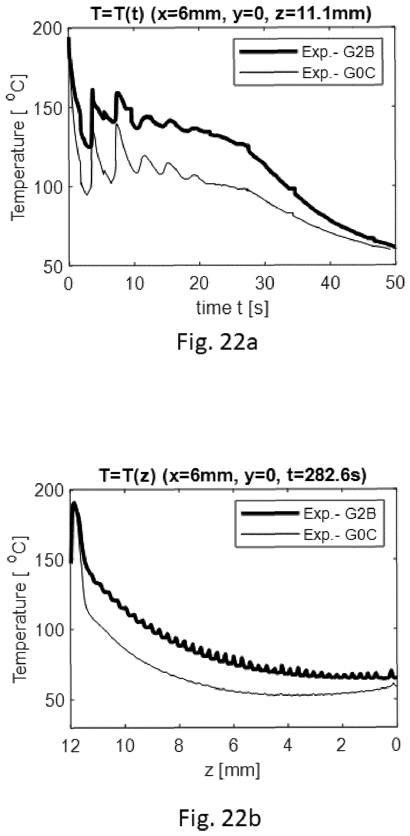

Fig.22 presents the monitored temperature profiles in printing a double-wall of PLA at a nozzle travelling speed of 5 mm/s with natural convection. Fig.22a presents the local temporal temperature profiles T=T(t) at the location (6,0,11.1) mm with the hot-ends GOC and G2B. Due to the stronger pre-heating and post-heating effects of converged thermal radiation from G2B, the part cooled down much more slowly than the case of printing with hot-end G0C, and the temperature upon reheating was higher by 27°C. The maximum cooling rate ($|\partial T/\partial t|$) was decreased from 166 to 134°C/s. Fig.22b presents the spatial temperature profiles T=T(z) at x=6 mm, y=0 mm, and t=282.6 s with hot-ends GOC and G2B. It can be seen the part printed with G2B has a higher temperature everywhere than the counterpart printed with G0C, and the temperature gradient component ($|\partial T/\partial z|$) is smaller in printing with hot-end G2B.

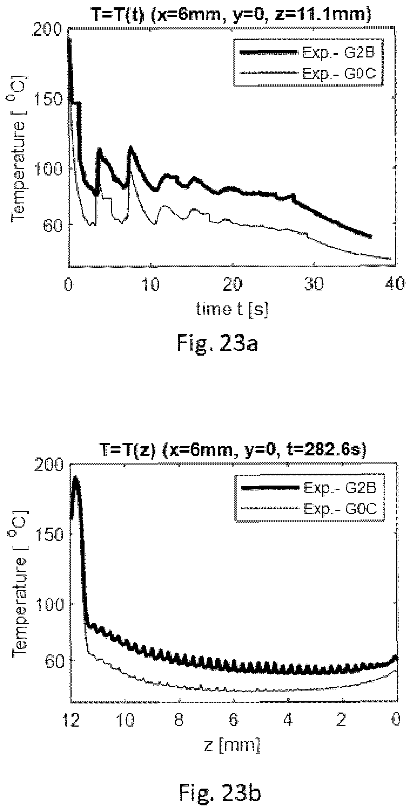

Fig.23 presents the monitored temperature profiles in printing a double-wall of PLA at a nozzle travelling speed of 5 mm/s, while an external fan was used for part cooling. Fig.23a presents the local temporal temperature profiles T=T(t) at the location (6,0,11.1) mm with the hot-ends GOC and G2B. Due to the stronger pre-heating and post-heating effects of converged thermal radiation from G2B, the part cooled down much more slowly than the case of printing with hot-end G0C, and the temperature upon reheating was higher by 22°C. The maximum cooling rate ($|\partial T/\partial t|$) was decreased from 278 to 160°C/s. Fig.22b presents the spatial temperature profiles T=T(z) at x=6 mm, y=0 mm, and t=282.6 s with hot-ends GOC and G2B. It can be seen the part printed with G2B has a higher temperature everywhere than the counterpart printed with G0C, and the temperature gradient component ($|\partial T/\partial z|$) is smaller in printing with hot-end G2B.

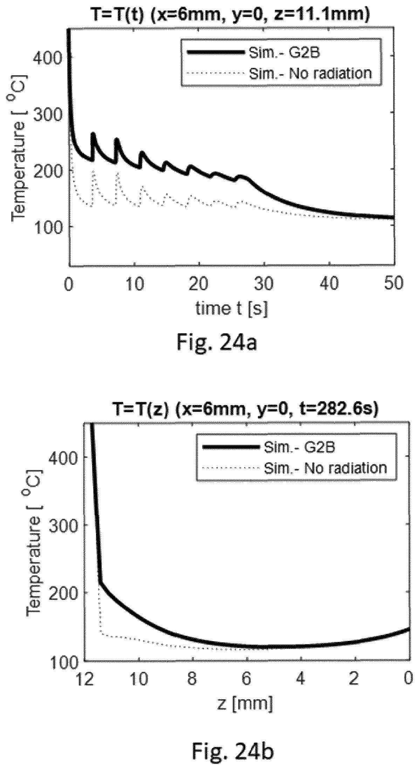

Fig.24 presents the simulated temperature profiles in printing a double-wall of PEEK at a nozzle travelling speed of 5 mm/s with natural convection. Fig.24a presents the local temporal temperature profiles T=T(t) at the location (6,0,11.1) mm with the hot-ends GOC and G2B. Due to the stronger pre-heating and post-heating effects of converged thermal radiation from G2B, the part cools down much more slowly than the case of printing with hot-end G0C, and the temperature upon reheating was higher by 83°C. The maximum cooling rate ($|\partial T/\partial t|$) was decreased from 942 to 669°C/s. Fig.24b presents the spatial temperature profiles T=T(z) at x=6 mm, y=0 mm, and t=282.6 s with hot-ends GOC and G2B. It can be seen the part printed with G2B has a higher temperature everywhere than the counterpart printed with G0C, and the temperature gradient component ($|\partial T/\partial z|$) is smaller in printing with hot-end G2B.

These observations of slowed-down part cooling and milder temperature gradient due to pre-heating and post-heating in Figs.21, 22, 23, 24 are beneficial for the bond development and ultimate mechanical properties, particularly when the parted part could cool down close to the glass transition temperature of the material (around 60°C for PLA in Fig.23).

## Mechanical properties of printed parts

Tensile mechanical properties were performed according to test standard ASTM D638-14. Type V samples were printed with three different hot-ends: G0C, G2C and G2B. In a single build cycle, five specimens were batch printed but they were separated by 25 mm from each other in the X-direction. The slicing software was Slic3rPE version 1.42.0, with the default G-code command M221 changed to 100%. The raft layer was 2. The travelling speed was 10 mm/s. The infill ratio was 100%, at the rectilinear pattern and angles of $\pm 45°$. The retraction was set at 0.8 mm. The part cooling fan was disabled. The strand spacing was 400 $\mu$m. Two sets of processing parameters were used, namely a layer thickness of 100 $\mu$m with a strand width of 421.5 $\mu$m and a layer thickness of 300 $\mu$m with a strand width of 464.4 $\mu$m.

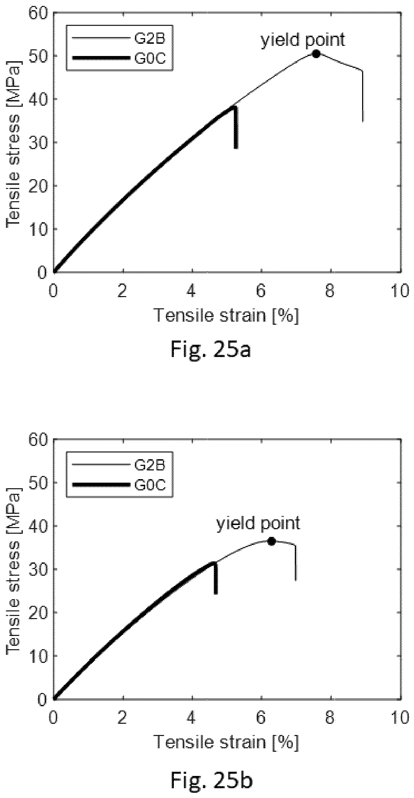

The tensile tests were performed on an Instron 3367 machine equipped with a 5kN load cell. The loading speed was 1 mm/min. The tensile strain was calculated based on the machine displacement and the gauge length of 7.62 mm. For each sample, at least 5 specimens were tested. Table 1 summarises the tensile strength results. Figs.25a, 25b present exemplary stress-strain curves of parts printed with GOC and G2B at layer thicknesses of 100 and 300 $\mu$m, respectively.

Table 1

| Layer thickness | Hot-end | Tensile strength (standard deviation) [MPa] | Specimen number | Specimen showing yield |
|---|---|---|---|---|
| 100 $\mu$m | GOC | 38.54(4.71) | 17 | 0 |
| | G2C | 48.17(2.08) | 5 | 1 |
| | G2B | 49.10(2.62) | 9 | 9 |
| 300 $\mu$m | G0C | 33.71(2.75) | 13 | 3 |
| | G2C | 33.31(4.16) | 5 | 3 |
| | G2B | 36.33(0.91) | 8 | 7 |

At the layer thickness of 100 $\mu$m, all tensile bars (17 out of 17) printed from GOC showed brittle failure (Fig.25a). The failure was initiated by the weak bond between layers. The average tensile strength was 38.54 MPa. The tensile bars printed from G2C showed improvement in the tensile deformation. One out of five specimens showed yield deformation in the tension loading. The tensile strength was increased to 48.17 MPa. Statistical analysis of variance indicates the change is significant ($P_{G0C-G2C}$= 0.00029). The tensile bars printed from G2B showed further improvement in the tensile deformation. All specimens (9 out of 9) showed yield deformation in the tension loading (Fig.25a). The tensile strength was increased to 49.10 MPa. This marks a 27% increase in the bond strength. Statistical analysis of variance indicates the change is also significant ($_{PG0C-G2B}$= 2.1E-6).

At the layer thickness of 300 $\mu$m, the majority of tensile bars (10 out of 13) printed from GOC showed brittle failure (Fig.25b). The failure was initiated by the weak bond between layers. The average tensile strength was 33.71 MPa. The tensile bars printed from G2C showed improvement in the tensile deformation. Three out of five specimens showed yield deformation in the tension loading. However, the tensile strength was slightly decreased to 33.31 MPa. Statistical analysis of variance indicates this change is insignificant ($p_{G0C\text{-}G2C}$= 0.81). The tensile bars printed from G2B showed improvement in the tensile deformation. The majority of the specimens (7 out of 8) showed yield deformation in the tension loading (Fig.25b). And the tensile strength was increased to 36.33 MPa. This marks an 8% increase in the bond strength. Statistical analysis of variance indicates the change is significant ($p_{G0C\text{-}G2B}$= 0.018).

**Claims**

1. A liquefier assembly for use in an extrusion-based additive manufacturing apparatus, comprising:

   - a liquefier tube extending between an inlet opening and an outlet opening, wherein the inlet opening is configured to receive a consumable material, and wherein the liquefier tube is configured to facilitate the transport of the consumable material through the liquefier assembly between the inlet opening and the outlet opening,
   - a nozzle assembly coupled to the outlet opening of the liquefier tube and configured to extrude the consumable material in a first direction; and
   - a heater block assembly disposed around at least a portion of the liquefier tube and configured to heat the consumable material in the liquefier tube, comprising a first major outer surface facing said first direction and a first recess in the first major outer surface, wherein the first recess exhibits, in section, at least one boundary edge configured to converge thermal radiation in substantially the first direction or a direction having an angle to said first direction.

2. The liquefier assembly according to claim 1, wherein the nozzle assembly is at least partly disposed in a portion of the first recess.

3. The liquefier assembly according to claim 1 or 2, wherein said first recess creates a cavity with respect to said nozzle assembly.

4. The liquefier assembly according to any of the previous claims, wherein the first recess is a first cylindrical shaped recess extending in a working direction, wherein the working direction corresponds to, when the liquefier assembly is in use, a direction in which it is moveable.

5. The liquefier assembly according to the previous claim, wherein the major outer surface further comprises a second cylindrical shaped recess extending in the working direction.

6. The liquefier assembly according to claim 5, wherein the first and the second cylindrical shaped recess are separated from each other over a core-to-core distance w, wherein w is between 0.8 and 20 times the diameter opening of the nozzle $\phi$, and in particular 1.2 times $\phi$.

7. The liquefier assembly according to any of the previous claims, wherein the at least one boundary edge of the recess, in section, defines a circular, elliptical, parabolic, sinusoidal, rectangular, triangular, polygonal, or a smooth or piece-wise smooth shape.

8. The liquefier assembly according to any of the previous claims, said at least one boundary edge of the recess is concave.

9. The liquefier assembly according to any of the preceding claims, wherein the major outer surface comprises a plurality of second recesses, wherein each second recess exhibiting, in section, at least one boundary edge configured to converge thermal radiation in substantially the first direction.

10. The liquefier assembly according to claim 9, wherein the first recess and the plurality of second recesses are disposed in a one- or two-dimensional pattern over at least a portion of the major outer surface.

11. The liquefier assembly according to any of the preceding claims, wherein at least the first recess and/or the plurality of second recesses have an emissivity of at least 0.03, preferably at least 0.5, or more preferably at least 0.9.

12. The liquefier assembly according to any of the preceding claims, wherein the heater block assembly further comprises at least one cavity adapted to receive at least one means for controlling the heating of the consumable material.

13. The liquefier assembly according to any of the preceding claims, wherein the heater block assembly further comprises at least a first part and a second part, wherein the first part is in direct contact with the nozzle assembly and the second part is removable attachable to the first part.

14. The liquefier assembly according to the previous claim, wherein the first recess is only disposed in the major outer surface of the second part.

15. The liquefier assembly according to any of the preceding claims, wherein the recess is multifaceted.

16. A method for printing a three-dimensional part in a layer-by-layer manner with an additive manufacturing system, the method comprising:

- feeding a consumable material to a liquefier assembly, wherein the liquefier comprising a liquefier tube extending between an inlet opening configured to receive a consumable material and an outlet opening, wherein the liquefier tube is configured to facilitate the transport of the consumable material through the liquefier assembly between the inlet opening and the outlet opening, a nozzle assembly coupled to or integrally formed with the outlet opening of the flow channel and configured to extrude the consumable material in a first direction, and a heater block assembly disposed around at least a portion of the liquefier tube and configured to heat the consumable material in the liquefier tube, comprising a major outer surface facing the first direction and a first recess in the major outer surface, wherein the first recess exhibiting, in section, at least one boundary edge configured to converge thermal radiation in substantially the first direction or a direction having an angle to the first direction;
- Heating the consumable material using the heater block assembly of the liquefier assembly to at least a working temperature of the consumable material;
- Disposing the heater block assembly at a distance between one to fifteen millimetres from a build platform on which a first flow of extruded consumable material will be disposed; and
- Extruding the heated consumable material in the first direction at a predetermined flow rate to produce a first road of the extruded material on the build platform.

17. The method according to the previous claim, further comprising a step of moving the liquefier assembly in a working direction with relative working velocity relative to the building platform of at least two millimetres per second, in particular at least ten millimetres per second, or more in particular at least five hundred millimetres per second.

**Patentansprüche**

1. Eine Verflüssigeranordnung zur Verwendung in einer extrusionsbasierten additiven Fertigungseinrichtung, umfassend:

- ein Verflüssigerrohr, das sich zwischen einer Einlassöffnung und einer Auslassöffnung erstreckt, wobei die Einlassöffnung konfiguriert ist, um ein Verbrauchsmaterial aufzunehmen, und wobei das Verflüssigerrohr konfiguriert ist, um den Transport des Verbrauchsmaterials durch die Verflüssigeranordnung zwischen der Einlassöffnung und der Auslassöffnung zu erleichtern,
- eine Düsenanordnung, die mit der Auslassöffnung des Verflüssigerrohres gekoppelt ist und konfiguriert ist, um das Verbrauchsmaterial in einer ersten Richtung zu extrudieren; und
- eine Heizblockanordnung, die um mindestens einen Abschnitt des Verflüssigerrohres angeordnet ist, und konfiguriert ist, um das Verbrauchsmaterial in dem Verflüssigerrohr zu erhitzen, umfassend eine erste Hauptaußenoberfläche, die in die erste Richtung zeigt, und eine erste Aussparung in der ersten Hauptaußenoberfläche, wobei die erste Aussparung im Querschnitt mindestens eine Begrenzungskante vorweist, die konfiguriert ist, um Wärmestrahlung in im Wesentlichen der ersten Richtung oder einer Richtung zusammenzuführen, die einen Winkel zur ersten Richtung aufweist.

2. Die Verflüssigeranordnung nach Anspruch 1, wobei die Düsenanordnung mindestens teilweise in einem Abschnitt der ersten Aussparung angeordnet ist.

3. Die Verflüssigeranordnung nach Anspruch 1 oder 2, wobei die erste Aussparung einen Hohlraum in Bezug auf die Düsenanordnung schafft.

4. Die Verflüssigeranordnung nach einem der vorstehenden Ansprüche, wobei die erste Aussparung eine erste zylindrisch geformte Aussparung ist, die sich in einer Arbeitsrichtung erstreckt, wobei die Arbeitsrichtung, wenn die Verflüssigeranordnung in Gebrauch ist, einer Richtung entspricht, in die sie bewegbar ist.

5.  Die Verflüssigeranordnung nach dem vorstehenden Anspruch, wobei die Hauptaußenoberfläche weiter eine zweite zylindrisch geformte Aussparung umfasst, die sich in der Arbeitsrichtung erstreckt.

6.  Die Verflüssigeranordnung nach Anspruch 5, wobei die erste und die zweite zylindrisch geformte Aussparung voneinander über einen Kern-zu-Kern Abstand w getrennt sind, wobei w zwischen 0,8 und 20 Mal der Durchmesseröffnung des Düsen-ø, und insbesondere 1,2 Mal dem ø liegt.

7.  Die Verflüssigeranordnung nach einem der vorstehenden Ansprüche, wobei die mindestens eine Begrenzungskante der Aussparung im Querschnitt eine kreisförmige, elliptische, parabelförmige, sinusförmige, rechteckige, dreieckige, polygonal, oder eine glatte oder stückweise glatte Form definiert.

8.  Die Verflüssigeranordnung nach einem der vorstehenden Ansprüche, wobei die mindestens eine Begrenzungskante der Aussparung konkav ist.

9.  Die Verflüssigeranordnung nach einem der vorstehenden Ansprüche, wobei die Hauptaußenoberfläche eine Vielzahl von zweiten Aussparungen umfasst, wobei jede zweite Aussparung im Querschnitt mindestens eine Begrenzungskante vorweist, die konfiguriert ist, um Wärmestrahlung in im Wesentlichen der ersten Richtung zusammenzuführen.

10. Die Verflüssigeranordnung nach Anspruch 9, wobei die erste Aussparung und die Vielzahl von zweiten Aussparungen in eine ein- oder zweidimensionalen Muster über mindestens einen Abschnitt der Hauptaußenoberfläche angeordnet sind.

11. Die Verflüssigeranordnung nach einem der vorstehenden Ansprüche, wobei mindestens die erste Aussparung und/oder die Vielzahl von zweiten Aussparungen einen Emissionsgrad von mindestens 0,03, vorzugsweise mindestens 0,5, oder bevorzugter mindestens 0,9 aufweisen.

12. Die Verflüssigeranordnung nach einem der vorstehenden Ansprüche, wobei die Heizblockanordnung weiter mindestens einen Hohlraum umfasst, der angepasst ist, um mindestens ein Mittel zum Steuern der Heizung des Verbrauchsmaterials aufzunehmen.

13. Die Verflüssigeranordnung nach einem der vorstehenden Ansprüche, wobei die Heizblockanordnung weiter mindestens einen ersten Teil und einen zweiten Teil umfasst, wobei der erste Teil in direktem Kontakt mit der Düsenanordnung ist und der zweite Teil abnehmbar am ersten Teil befestigbar ist.

14. Die Verflüssigeranordnung nach dem vorstehenden Anspruch, wobei die erste Aussparung nur in der Hauptaußenoberfläche des zweiten Teils angeordnet ist.

15. Die Verflüssigeranordnung nach einem der vorstehenden Ansprüche, wobei die Aussparung vielseitig ist.

16. Ein Verfahren zum Drucken eines dreidimensionalen Teils in einer Art Schicht-für-Schicht mit einem additiven Fertigungssystem, wobei das Verfahren umfasst:

    - Zuführen eines Verbrauchsmaterials zu einer Verflüssigeranordnung, wobei der Verflüssiger ein Verflüssigerrohr umfasst, das sich zwischen einer Einlassöffnung, die konfiguriert ist, um ein Verbrauchsmaterial aufzunehmen, und einer Auslassöffnung erstreckt, wobei das Verflüssigerrohr konfiguriert ist, um den Transport des Verbrauchsmaterials durch die Verflüssigeranordnung zwischen der Einlassöffnung und der Auslassöffnung zu erleichtern, eine Düsenanordnung, die mit der Auslassöffnung des Flusskanals gekoppelt oder integral damit gebildet ist, und konfiguriert ist, um das Verbrauchsmaterial in einer ersten Richtung zu extrudieren, und eine Heizblockanordnung, die um mindestens einen Abschnitt des Verflüssigerrohres angeordnet ist, und konfiguriert ist, um das Verbrauchsmaterial in dem Verflüssigerrohr zu erhitzen, umfassend eine Hauptaußenoberfläche, die in die erste Richtung zeigt, und eine erste Aussparung in der Hauptaußenoberfläche, wobei die erste Aussparung im Querschnitt mindestens eine Begrenzungskante vorweist, die konfiguriert ist, um Wärmestrahlung in im Wesentlichen der ersten Richtung oder einer Richtung zusammenzuführen, die einen Winkel zur ersten Richtung aufweist.
    - Erhitzen des Verbrauchsmaterials unter Verwendung der Heizblockanordnung der Verflüssigeranordnung auf mindestens eine Arbeitstemperatur des Verbrauchsmaterials;
- Anordnen der Heizblockanordnung in einem Abstand zwischen ein bis fünfzehn Millimetern von einer Bauplattform, auf der ein erster Fluss aus extrudiertem Verbrauchsmaterial angeordnet werden wird; und
- Extrudieren des erhitzten Verbrauchsmaterials in der ersten Richtung mit einer vorbestimmten Flussrate, um eine erste Bahn des extrudierten Materials auf der Bauplattform herzustellen.

17. Das Verfahren nach dem vorstehenden Anspruch, weiter umfassend einen Schritt zum Bewegen der Verflüssigeranordnung in einer Arbeitsrichtung mit relativer Arbeitsgeschwindigkeit in Bezug auf die Bauplattform von mindestens zwei Millimetern pro Sekunde, insbesondere mindestens zehn Millimetern pro Sekunde, oder mehr insbesondere mindestens fünfhundert Millimetern pro Sekunde.

**Revendications**

1. Ensemble liquéfacteur destiné à être utilisé dans un appareil de fabrication additive à base d'extrusion, comprenant :

    o un tube liquéfacteur s'étendant entre une ouverture d'entrée et une ouverture de sortie, où l'ouverture d'entrée est configurée pour recevoir un matériau consommable, et où le tube liquéfacteur est configuré pour faciliter le transport du matériau consommable à travers l'ensemble liquéfacteur entre l'ouverture d'entrée et l'ouverture de sortie ;
    o un ensemble de buse couplé à l'ouverture de sortie du tube liquéfacteur et configuré pour extruder le matériau consommable dans une première direction ; et
    o un ensemble de bloc chauffant disposé autour d'au moins une portion du tube liquéfacteur et configuré pour chauffer le matériau consommable dans le tube liquéfacteur, comprenant une première surface extérieure principale faisant face à ladite première direction et un premier évidement dans la première surface extérieure principale, où le premier évidement présente, en section, au moins un bord de délimitation configuré pour faire converger un rayonnement thermique sensiblement dans la première direction ou une direction formant un angle avec ladite première direction.

2. L'ensemble liquéfacteur selon la revendication 1, où l'ensemble de buse est au moins partiellement disposé dans une portion du premier évidement.

3. L'ensemble liquéfacteur selon la revendication 1 ou 2, où ledit premier évidement crée une cavité par rapport audit ensemble de buse.

4. L'ensemble liquéfacteur selon l'une quelconque des revendications précédentes, où le premier évidement est un premier évidement de forme cylindrique s'étendant dans une direction de travail, où la direction de travail correspond, lorsque l'ensemble liquéfacteur est en cours d'utilisation, à une direction dans laquelle il est mobile.

5. L'ensemble liquéfacteur selon la revendication précédente, où la surface extérieure principale comprend en outre un second évidement de forme cylindrique s'étendant dans la direction de travail.

6. L'ensemble liquéfacteur selon la revendication 5, où le premier et le second évidement de forme cylindrique sont séparés l'un de l'autre sur une distance d'axe en axe w, où w est comprise entre 0,8 et 20 fois l'ouverture de diamètre de la buse $\varphi$, et en particulier 1,2 fois $\varphi$.

7. L'ensemble liquéfacteur selon l'une quelconque des revendications précédentes, où l'au moins un bord de délimitation de l'évidement, en section, définit une forme circulaire, elliptique, parabolique, sinusoïdale, rectangulaire, triangulaire, polygonale, ou lisse ou lisse par morceaux.

8. L'ensemble liquéfacteur selon l'une quelconque des revendications précédentes, où ledit au moins un bord de délimitation de l'évidement est concave.

9. L'ensemble liquéfacteur selon l'une quelconque des revendications précédentes, où la surface extérieure principale comprend une pluralité de seconds évidements, où chaque second évidement présentant, en section, au moins un bord de délimitation configuré pour faire converger un rayonnement thermique sensiblement dans la première direction.

**10.** L'ensemble liquéfacteur selon la revendication 9, où le premier évidement et la pluralité de seconds évidements sont disposés selon un motif unidimensionnel ou bidimensionnel sur au moins une portion de la surface extérieure principale.

**11.** L'ensemble liquéfacteur selon l'une quelconque des revendications précédentes, où au moins le premier évidement et/ou la pluralité de seconds évidements ont une émissivité d'au moins 0,03, de préférence d'au moins 0,5, ou plus préférablement d'au moins 0,9.

**12.** L'ensemble liquéfacteur selon l'une quelconque des revendications précédentes, où l'ensemble de bloc chauffant comprend en outre au moins une cavité adaptée pour recevoir au moins un moyen pour commander le chauffage du matériau consommable.

**13.** L'ensemble liquéfacteur selon l'une quelconque des revendications précédentes, où l'ensemble de bloc chauffant comprend en outre au moins une première partie et une seconde partie, où la première partie est en contact direct avec l'ensemble de buse et la seconde partie est attachable de manière amovible à la première partie.

**14.** L'ensemble liquéfacteur selon la revendication précédente, où le premier évidement est uniquement disposé dans la surface extérieure principale de la seconde partie.

**15.** L'ensemble liquéfacteur selon l'une quelconque des revendications précédentes, où l'évidement est à facettes multiples.

**16.** Procédé d'impression d'une pièce tridimensionnelle couche par couche avec un système de fabrication additive, le procédé comprenant :

o l'alimentation d'un matériau consommable à un ensemble liquéfacteur, où l'ensemble liquéfacteur comprenant un tube liquéfacteur s'étendant entre une ouverture d'entrée configurée pour recevoir un matériau consommable et une ouverture de sortie, où le tube liquéfacteur est configuré pour faciliter le transport du matériau consommable à travers l'ensemble liquéfacteur entre l'ouverture d'entrée et l'ouverture de sortie, un ensemble de buse couplé à ou intégralement formé avec l'ouverture de sortie du canal d'écoulement et configuré pour extruder le matériau consommable dans une première direction, et un ensemble de bloc chauffant disposé autour d'au moins une portion du tube liquéfacteur et configuré pour chauffer le matériau consommable dans le tube liquéfacteur, comprenant une surface extérieure principale faisant face à la première direction et un premier évidement dans la surface extérieure principale, où le premier évidement présentant, en section, au moins un bord de délimitation configuré pour faire converger un rayonnement thermique sensiblement dans la première direction ou une direction formant un angle avec la première direction ;
o le chauffage du matériau consommable en utilisant l'ensemble de bloc chauffant de l'ensemble liquéfacteur à au moins une température de travail du matériau consommable ;
o la disposition de l'ensemble de bloc chauffant à une distance comprise entre un et quinze millimètres d'une plateforme de construction sur laquelle un premier flux de matériau consommable extrudé sera disposé ; et
o l'extrusion du matériau consommable chauffé dans la première direction à un débit prédéterminé pour produire un premier cordon du matériau extrudé sur la plateforme de construction.

**17.** Le procédé selon la revendication précédente, comprenant en outre une étape de déplacement de l'ensemble liquéfacteur dans une direction de travail avec une vitesse de travail relative par rapport à la plateforme de construction d'au moins deux millimètres par seconde, en particulier d'au moins dix millimètres par seconde, ou plus particulièrement d'au moins cinq cents millimètres par seconde.

Fig. 1

Fig. 2

20

3

34

1

2

32

6

5

31

23

Z

Y

33

X

Fig. 3

Fig. 4a

Fig. 4b

Fig. 4c

Fig. 5a

Fig. 5b

Fig. 6a

Fig. 6b

Fig. 7a

Fig. 7b

Fig. 8a

Fig. 8b

Fig. 8c

Length L

Z

6

P

82

81

811

δ

821

Fig. 8d

P

Y

81

6

82

X

Fig. 8e

Fig. 9a

Fig. 9b

Fig. 9c

Fig. 10a

Fig. 10b

Fig. 10c

Fig. 10d

Fig. 11a

Fig. 11b

Fig. 11c

Fig. 11d

Fig. 11e

Fig. 12a

Fig. 12b

920

Fig. 13a

Fig. 13b

Fig. 14a

Fig. 14b

Fig. 14c

Fig. 14d

Fig. 15a

Fig. 15b

Fig. 15c

Fig. 15d

Fig. 16a

Fig. 16b

Fig. 16c

Fig. 16d

Fig. 16e

Fig. 17a

Fig. 17b

Fig. 17c

Fig. 17d

Fig. 18a

Fig. 18b

Fig. 18c

Fig. 18d

Fig. 19a

Fig. 19b

Fig. 20a

Fig. 20b

Fig. 20c

Fig. 20d

Fig. 21a

Fig. 21b

Fig. 22a

Fig. 22b

Fig. 23a

Fig. 23b

Fig. 24a

Fig. 24b

Fig. 25a

Fig. 25b

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 20200010682

- US 2020016823 A1

**Non-patent literature cited in the description**

- **HU et al.** Improved design of fused deposition modeling equipment for 3D printing of high-performance PEEK parts. *Mech. Mater.*, October 2019, vol. 137, 103139
- **RAVOORI, D. et al.** Nozzle-integrated pre-deposition and post-deposition heating of previously deposited layers in polymer extrusion-based additive manufacturing. *Addit. Manuf.*, August 2019, vol. 28, 719

- **E. FERRARIS et al.** Thermography based in-process monitoring of Fused Filament Fabrication of polymeric parts. *CIRP Ann.*, 2019, vol. 68, 213-216
- **J. ZHANG et al.** T4F3: Temperature for Fused Filament Fabrication. *Prog. Addit. Manuf.*, 2022
- **B. HU et al.** Improved design of fused deposition modeling equipment for 3D printing of high-performance PEEK parts. *Mech. Mater.*, 2019, vol. 137, 103139